# EUROPEAN PATENT APPLICATION

(11) **EP 4 391 299 A1**
(43) Date of publication of application: **26.06.2024**
(21) Application number: 22858747.3
(22) Date of filing: 17.08.2022
(51) Int. Cl.: H02J 50/00, H02J 50/10, H01F 27/28, H01F 38/14, B60L 53/12

(54) **WIRELESS POWER TRANSMISSION DEVICE COMPRISING POWER TRANSFER CIRCUIT AND COIL STRUCTURE FOR WIRELESS POWER TRANSMISSION, AND WIRELESS POWER TRANSMISSION SYSTEM**

(30) Priority: 17.08.2021 KR 20210107905
(71) Applicant: Hyundai Motor Company, Seoul 06797 (KR); Kia Corporation, Seocho-gu Seoul 06797 (KR)
(72) Inventor: SEONG, Jae Yong, Hwaseong-si, Gyeonggi-do 18280 (KR)
(74) Representative: Viering, Jentschura & Partner mbB Patent- und Rechtsanwälte
(86) International application number: PCT/KR2022/012282
(87) International publication number: WO 2023/022510

(57) **Abstract**

Disclosed is a wireless power transmission pad configured to transmit wireless power to a reception pad that comprises a secondary coil. The wireless power transmission pad comprises: a primary coil arranged to surround the central space; ferrite for magnetic-coupling with the primary coil; and a housing for supporting the primary coil and the ferrite, wherein the primary coil is formed such that a flat wire having a vertical type structure, in which the long axis of a cross section is parallel to the central axis of the primary coil, is wound multiple times.

## Description

### TECHNICAL FIELD

The present disclosure relates to a wireless power transmission device/pad and a wireless power reception device/pad for wireless power transfer (WPT) and, more specifically, to a coil structure and a power transfer circuit configured to enhance a power transfer efficiency during the wireless power transfer.

### BACKGROUND ART

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

Meanwhile, structures of the transmission pad and the reception pad may be critical factors for ensuring a high power transfer efficiency in the magnetic resonance type wireless power transfer system. In particular, in a typical configuration of the transmission pad or the reception pad which includes a ferrite structure made of a ferrite which is a magnetic material facilitating the wireless power transfer and a coil wound to surround the ferrite structure, the power transfer efficiency may vary depending on the ferrite structure and/or a structure of the coil.

Accordingly, there is a need for a coil structure that may improve the power transfer efficiency in the wireless power transfer system.

### DISCLOSURE OF INVENTION

### TECHNICAL PROBLEM

To address the above problems, one objective of the present disclosure is to provide a new coil structure which may increase an efficiency of a process of supplying electric power from a power supply device or electric vehicle supply equipment (EVSE) to an electric vehicle.

Another objective of the present disclosure is to provide a wireless power transfer (WPT) device having a high power transfer efficiency which employs the new coil structure.

Another obj ective of the present disclosure is to provide a power transfer circuit for driving the wireless power transfer device employing the new coil structure.

### TECHNICAL SOLUTION

A wireless power transmission pad according to an example of the present disclosure for achieving the above objective(s) is a wireless power transmission pad configured to wirelessly transmit power to a reception pad that comprises a secondary coil. The wireless power transmission pad includes: a primary coil arranged to surround a central space; a ferrite member configured to form a magnetic coupling with the primary coil; and a housing configured to support the primary coil and the ferrite member. The primary coil comprises a flat wire wound by a plurality of turns to be arranged in a structure that a length of a major axis of a cross section of the flat wire is parallel with a central axis of the primary coil.

The primary coil may include a plurality of coil elements each of which is formed by winding the flat wire by one turn so as to surround the central axis of the primary coil.

Lengths of major axes of cross sections of the plurality of coil elements may be formed to be the same as each other.

Lengths of major axes of cross sections of the plurality of coil elements may be formed to be larger as the coil elements are closer to the central axis of the primary coil.

Lengths of major axes of cross sections of the plurality of coil elements may be formed to be larger as the coil elements are farther from the central axis of the primary coil.

Distances in a z-axis direction from the ferrite member to the plurality of coil elements may be formed to be the same as each other.

A distance in a z-axis direction from the ferrite member to each of the plurality of coil elements may be formed to be larger as the coil element is closer to the central axis of the primary coil.

A distance in a z-axis direction from the ferrite member to each of the plurality of coil elements may be formed to be larger as the coil element is farther from the central axis of the primary coil.

The plurality of coil elements may be arranged parallel to each other.

The plurality of coil elements may be disposed sequentially such that each of the plurality of coil elements is disposed in an elevated position in a z-axis direction as the coil element is closer to the central axis of the primary coil.

The plurality of coil elements may be disposed sequentially such that each of the plurality of coil elements is disposed in a lowered position in a z-axis direction as the coil element is closer to the central axis of the primary coil.

The primary coil may include: a first flat wire element comprising a plurality of first coil elements; and a second flat wire element comprising a plurality of second coil elements. The first flat wire element and the second flat wire element may be disposed to be spaced apart from each other by a certain distance in a z-axis direction.

The wireless power transmission pad may be specified by wireless power transmission pad information comprising at least one of: a type of the primary coil, a structure of the primary coil, specifications of the primary coil, a charging distance between the primary coil and the secondary coil, and/or a parameter of a power transfer circuit to which the primary coil is to be connected.

A wireless power transfer system according to an example of the present disclosure is prepared to wirelessly transmit power from a transmission pad to a reception pad. The wireless power transfer system includes: the transmission pad comprising a primary coil; and the reception pad comprising a secondary coil. The transmission pad includes: the primary coil arranged to surround a central space; a ferrite member configured to form a magnetic coupling with the primary coil; and a housing configured to support the primary coil and the ferrite member. The primary coil comprises a flat wire wound by a plurality of turns to be arranged in a structure that a length of a major axis of a cross section of the flat wire is parallel with a central axis of the primary coil.

The wireless power transfer system may be specified by wireless power transfer system information comprising at least one of: a type of the primary coil, a structure of the primary coil, specifications of the primary coil, a type of the secondary coil, a structure of the secondary coil, specifications of the secondary coil, a charging distance between the primary coil and the secondary coil, and/or a parameter of a power transfer circuit to which the primary coil and the secondary coil are to be connected.

The primary coil may include a plurality of coil elements each of which is formed by winding the flat wire by one turn so as to surround the central axis of the primary coil.

Lengths of major axes of cross sections of the plurality of coil elements may be formed to be the same as each other.

Lengths of maj or axes of cross sections of plurality of coil elements may be formed to vary according to a distance from the coil element to the central axis of the primary coil.

The plurality of coil elements may be disposed sequentially such that each of the plurality of coil elements is disposed in an elevated position in a z-axis direction as the coil element is closer to the central axis of the primary coil.

The plurality of coil elements may be disposed sequentially such that each of the plurality of coil elements is disposed in a lowered position in a z-axis direction as the coil element is closer to the central axis of the primary coil.

### ADVANTAGEOUS EFFECTS

According to an exemplary embodiment of the present disclosure, a power transmission device/pad and a power reception device/pad having high power transfer efficiencies in consideration of electromagnetic characteristics may be implemented.

According to an exemplary embodiment of the present disclosure, the power transfer efficiency of the power transmission device/pad placed in the electric vehicle or the electric vehicle supply equipment (EVSE) and the power reception device/pad placed in the electric vehicle is increased.

According to an exemplary embodiment of the present disclosure, the power transmission device/pad and the power reception device/pad with an increased ratio of current transmission path to volume may be implemented by increasing a space factor and a ratio of a surface area to a cross sectional area.

According to an exemplary embodiment of the present disclosure, the power transmission device/pad and the power reception device/pad may be easily cooled and allow to reduce cooling costs.

According to an exemplary embodiment of the present disclosure, the power transmission device/pad and the power reception device/pad may be implemented with fewer space restrictions in arranging the ferrite member to be magnetically coupled to the coil.

According to an exemplary embodiment of the present disclosure, the power transmission device/pad and the power reception device/pad may be implemented with fewer space restrictions by placing the ferrite core inside the coil so that it is magnetically coupled to the coil.

### DESCRIPTION OF DRAWINGS

FIG. 1 is an illustration of a wireless power transfer system to which an exemplary embodiment of the present disclosure is applicable;
FIGS. 2 and 3 illustrate a Cartesian coordinate system compatible with a definition in SAE J2954 standard and applicable to an embodiment of the present disclosure;
FIG. 4 is a circuit diagram of an equivalent circuit of an electric vehicle wireless charging circuit according to an example of the present disclosure;
FIG. 5 is a conceptual cross sectional view and an elevation view of a power transmission pad according to an example of the present disclosure;
FIG. 6 is a conceptual cross sectional view and an elevation view of the power reception pad according to an example of the present disclosure;
FIG. 7 is an illustration for explaining an overall conceptual structure of the power transmission pad or the power reception pad according to an example of the present disclosure;
FIG. 8 is an elevation view for explaining an overall conceptual structure of the power transmission pad or the power reception pad according to an example of the present disclosure;
FIG. 9 is a cross sectional view for explaining an overall conceptual structure of the power transmission pad or the power reception pad according to an example of the present disclosure;
FIG. 10 is a top view for explaining an overall conceptual structure of the power transmission pad or the power reception pad according to an example of the present disclosure;
FIG. 11 is a conceptual illustration of a flat wire wound to constitute the power transmission pad or the power reception pad according to an example of the present disclosure;
FIGS. 12 through 14 are illustrations showing a conceptual structure of the power reception pad according to an example of the present disclosure;
FIGS. 15 and 16 are illustrations showing a conceptual structure of the power transmission pad according to an example of the present disclosure;
FIGS. 17 and 18 illustrate magnetic field simulation results for a coil structure of the power transmission pad according to an example of the present disclosure shown in FIGS. 15 and 16;
FIGS. 19 and 20 are illustrations showing a conceptual structure of the power transmission pad according to an example of the present disclosure;
FIGS. 21 and 22 illustrate magnetic field simulation results for a coil structure of the power transmission pad according to an example of the present disclosure shown in FIGS. 19 and 20;
FIGS. 23 and 24 are illustrations showing a conceptual structure of the power transmission pad according to an example of the present disclosure;
FIGS. 25 and 26 illustrate magnetic field simulation results for a coil structure of the power transmission pad according to an example of the present disclosure shown in FIGS. 23 and 24;
FIGS. 27 and 28 are illustrations showing a conceptual structure of the power transmission pad according to an example of the present disclosure;
FIGS. 29 and 30 illustrate magnetic field simulation results for a coil structure of the power transmission pad according to an example of the present disclosure shown in FIGS. 27 and 28;
FIGS. 31 through 33 are illustrations showing a conceptual structure of the power transmission pad according to an example of the present disclosure;
FIGS. 34 and 35 illustrate magnetic field simulation results for a coil structure of the power transmission pad according to an example of the present disclosure shown in FIGS. 31 through 33;
FIG. 36 is a block diagram illustrating a conceptual structure of a power transfer circuit for the wireless power transfer according to an example of the present disclosure;
FIG. 37 is a circuit diagram illustrating a conceptual structure of an example of a three-phase AC-DC rectification circuit shown in FIG. 36;
FIG. 38 is a circuit diagram illustrating a conceptual structure of an example of a SPWM inverter shown in FIG. 36;
FIG. 39 is a circuit diagram illustrating a conceptual structure of an example of a rectifier shown in FIG. 36;
FIG. 40 is a circuit diagram illustrating a conceptual structure of an example of a charger shown in FIG. 36;
FIG. 41 is a table summarizing an example of parameters of the power transfer circuit corresponding to the examples of FIGS. 15-18;
FIG. 42 is a table summarizing an example of parameters of the power transfer circuit corresponding to the examples of FIGS. 19-22;
FIG. 43 is a table summarizing an example of parameters of the power transfer circuit corresponding to the examples of FIGS. 23-26;
FIG. 44 is a table summarizing an example of parameters of the power transfer circuit corresponding to the examples of FIGS. 27-30;
FIG. 45 is a table summarizing an example of parameters of the power transfer circuit corresponding to the examples of FIGS. 31-35; and
FIG. 46 is a block diagram illustrating a generalized configuration of hardware included in the wireless power transmission pad and/or the wireless power reception pad or associated with the wireless power transmission pad and/or the wireless power reception pad to control a sequence for the wireless power transfer.

### BEST MODE

For a clearer understanding of the features and advantages of the present disclosure, exemplary embodiment(s) of the present disclosure will be described in detail with reference to the accompanied drawings. However, it should be understood that the present disclosure may be not be limited to particular embodiment(s) disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" or another identifiers such as "A" and "B" may be used to discriminate a component from the other ones but may not be intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies may be used herein for the purpose of describing particular exemplary embodiments only and may not be intended to limit the present disclosure. The singular forms include plural referents as well unless the context clearly dictates otherwise. Also, the expressions "comprises" or "includes" may be used to refer a presence of a combination of stated features, numbers, processing steps, operations, elements, or components, but may not be intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle power supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

The electric vehicle charging system may include a conductive charging system using a cable or a non-contact wireless power transfer system, but is not limited thereto. The electric vehicle charging system may be defined as a system that charges the battery mounted in the electric vehicle using electric power obtained from a commercial power grid or stored in an energy storage device and may have various forms depending on a type of the electric vehicle.

SAE TIR J2954 standard, which is one of the most representative industrial standards for wireless charging, establishes industry-standard specification guidelines that define acceptable criteria for interoperability, electromagnetic compatibility, minimum performance, safety and testing for wireless charging of light-duty electric and plug-in electric vehicles.

As an example of the wireless charging system, the wireless charging system (WCS) according to the J2954 standard may include a grid interface, a high frequency power inverter, power transfer coils, a filter, a rectifier, an optional regulator, and communication circuits between the vehicle energy charging/storage system and a grid connected power inverter. The grid interface may be similar to a conventional EVSE connection for single or three-phase AC power.

Exemplary embodiment(s) of the present disclosure will now be described in detail with reference to the accompanying drawings.

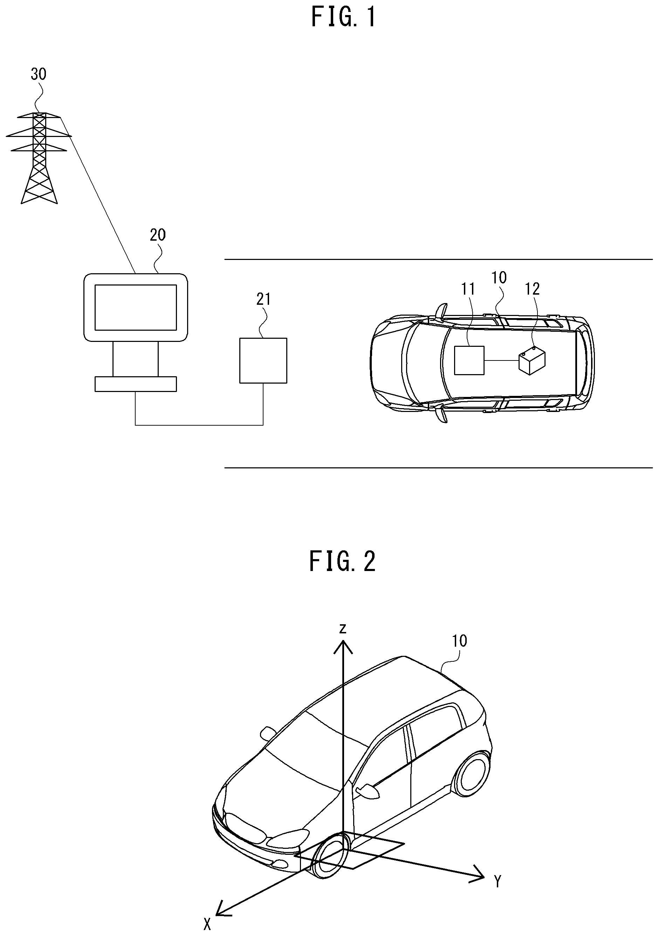

FIG. 1 is an illustration of a wireless power transfer system to which an exemplary embodiment of the present disclosure may be applied.

As shown in FIG. 1, the wireless power transfer may be performed by at least one component of an electric vehicle (EV) 10 and a charging station 20 and may be used for transferring electric power to the EV 10 without any conductive wiring.

The EV 10 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 10 may generally be defined as a vehicle that supplies an electric power derived from a rechargeable energy storage such as a battery 12 to an electric motor in a power train system of the EV 10.

The EV 10 may include a power reception pad 11 having a reception coil suitable for receiving the electric power for charging the battery 12 by the wireless power transfer and may include a plug receptacle or inlet suitable for receiving the electric power for charging the battery 12 by the conductive charging. In particular, the EV 10 configured for conductively charging the battery 12 may be referred to as the plug-in electric vehicle (PEV).

The charging station 20 may be connected to the power grid 30 or a power backbone, and may provide the AC power received from the power grid 30 or the power backbone to a power transmission pad 21 having a transmission coil through a power link.

The charging station 20 may communicate with the power grid 30, or an infrastructure management system or an infrastructure server managing the power grid, and may be configured to perform wireless communications with the EV 10. The wireless communications may be performed through Bluetooth, Zigbee, cellular, wireless local area network (WLAN), or the like.

The charging station 20 may be located at various places including a parking area of the owner's house of the EV 10, a parking lot for charging the EV at a gas station, a parking lot at a shopping center or a workplace, or the like, but is not limited thereto.

The wireless power transfer to the battery 12 of the EV 10 may be performed as follows. First, the power reception pad 11 of the EV 10 is disposed in an energy field over the power transmission pad 21. Then the reception coil in the power reception pad 21 and the transmission coil in the power transmission pad 11 may be coupled to and interact each other. An electromotive force may be induced in the power reception pad 11 as a result of the coupling or the interaction, and the battery 12 may be charged by the induced electromotive force.

The charging station 20 and the power transmission pad 21 as a whole or in part may be referred to as the supply power circuit (SPC) or the ground assembly (GA), of which meaning and function were defined above.

Also, the power reception pad 11 along with all or some of the other internal components of the EV 10 may be referred to as the EV power circuit (EVPC) or the vehicle assembly (VA), of which meaning and function were defined above.

Here, each of the power transmission pad 21 and the power reception pad 11 may be configured as a non-polarized or polarized pad.

The non-polarized pad may have one pole in a center of the pad and an opposite pole around its periphery. In this case, the magnetic flux may be formed to exit from the pole in the center of the pad and return to the pole in the periphery from outside of the pad.

The polarized pad may have two poles arranged symmetrically at opposite positions on the pad. In this case, the magnetic flux may be formed according to the orientation of the pad.

In the present specification, the power transmission pad 21 and the power reception pad 11 may be collectively referred to as wireless charging pads.

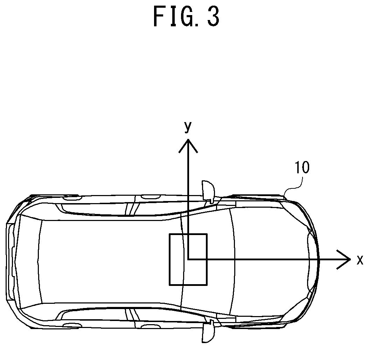

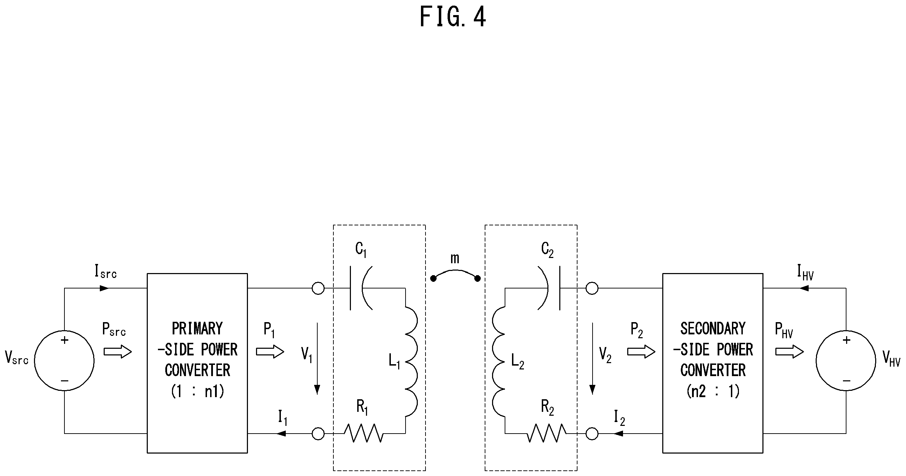

FIGS. 3 and 4 illustrate a Cartesian coordinate system compatible with a definition in the SAE J2954 standard and applicable to an embodiment of the present disclosure.

As shown in FIGS. 2 and 3, in the right-handed Cartesian coordinate system, +X axis may be set to point to the rear of the vehicle, and -X axis may be set to point to the front of the vehicle. +Y axis may be set to point to the right of the vehicle, i.e. to a passenger side of a left-hand drive car, and -Y axis may be set to point to the left of the vehicle in an exemplary embodiment. +Z axis may be set to point to the upward direction, and -Z axis may be set to point to the downward direction. The magnetic center of a coil of the power transmission pad 21 or the power reception pad 11 may be defined as x=0 and y=0, and a ground surface may be defined as z=0.

FIG. 4 is a circuit diagram of an equivalent circuit of an electric vehicle wireless charging circuit according to an example of the present disclosure.

A left portion of the circuit shown in FIG. 4 may be interpreted as a representation of all or part of a power supply Vsrc supplied from the power grid and a charging station 20 including the power transmission pad 21, and a right portion of the circuit shown in FIG. 4 may be interpreted as a representation of all or part of the electric vehicle including the power reception pad and the battery.

The left portion of the circuit shown in FIG. 4 may provide an output power P_{src} corresponding to the power source V_{src} supplied from the power grid to a primary-side power converter. The primary-side power converter may perform a frequency-conversion and AC-DC or DC-to-AC conversion of the power P_{src} to output a converted output power P₁ to a transmission coil L₁, so that the transmission coil L₁ may generate an electromagnetic field at a desired operating frequency.

The primary-side power converter may include an AC-DC converter configured to convert the power P_{src} which is an AC power supplied from the power grid into a DC power and a low-frequency (LF) converter configured to convert the DC power into an AC power having an operating frequency suitable for the wireless charging. For example, the operating frequency for the wireless charging may be determined to be in a frequency range 80-90 kHz, but is not limited thereto.

The power P₁ output by the primary-side power converter may be supplied to a circuit including the transmission coil L₁, a first capacitor C₁, and a first resistor Ri. In particular, a capacitance of the first capacitor C₁ may be determined as a value establishing the operating frequency suitable for the wireless charging together with the transmission coil L₁. The first resistor Ri may represent a power loss in the transmission coil L₁ and the first capacitor C₁.

Further, the transmission coil L₁ may be electromagnetically coupled with a reception coil L₂ by a coupling coefficient m so that a power P₂ is transferred to the reception coil L₂ or the power P₂ is induced in the reception coil L₂. Therefore, the meaning of power transfer in the present disclosure may be used interchangeably with the meaning of power induction.

The power P₂ induced in or transferred to the reception coil L₂ may be provided to a secondary-side power converter. Particularly, a capacitance of a second capacitor C₂ may be determined as a value establishing the operating frequency suitable for the wireless charging together with the reception coil L₂. A second resistor R₂ may represent a power loss in the reception coil L₂ and the second capacitor C₂.

The secondary-side power converter may include an AC-DC converter configured to convert the supplied power P₂ of the operating frequency to a DC power having a voltage level suitable for the battery V_{HV} of the EV.

The electric power P_{HV} converted from the power P₂ supplied to the secondary-side power converter may be used for charging the battery V_{HV} mounted inside the EV.

The right portion of the circuit shown in FIG. 4 may further include a switch for selectively connecting or disconnecting the reception coil L₂ with the battery V_{HV}.

Resonance frequencies of the transmission coil L₁ and the reception coil L₂ may be similar or identical to each other, and the reception coil L₂ may be positioned in the electromagnetic field generated by the transmission coil L₁.

It should be noted that the circuit of FIG. 4 is illustrative for the WPT in the EV WPT system used for exemplary embodiment(s) of the present disclosure, and the present disclosure is not limited to the circuit illustrated in FIG. 4.

On the other hand, since the power loss may increase with a distance between the transmission coil L₁ and the reception coil L₂, it may be an important factor to set the relative positions of the transmission coil L₁ and the reception coil L₂ appropriately.

The transmission coil L₁ may be included in the transmission pad 21 shown in FIG. 1, and the reception coil L₂ may be included in the reception pad 11 shown in FIG. 1. Additionally, the transmission coil may be referred to as the primary coil or a ground assembly (GA) coil, and the reception coil may be referred to as the secondary coil or a vehicle assembly (VA) coil. Therefore, a positional alignment between the transmission pad and the reception pad or a positional alignment between the EV and the transmission pad may also be an important factor.

The positional alignment between the transmission pad 21 and the reception pad 11 in the electric vehicle 10 shown in FIG. 1 may correspond to the term "alignment" described above and therefore may be defined as the positional alignment between the SPC/GA and the EVPC/VA and is not limited to the positional alignment of the transmitting pad 21 and the receiving pad 11.

The transmission pad 21 may be positioned below the ground surface, may be positioned on the ground surface, or may be positioned below the ground surface with its top surface being exposed over the ground surface. At this time, as shown in FIGS. 2 and 3, the x-axis may indicate the front-to-back or back-to-front direction of the vehicle, the y-axis may indicate the left-to-right or right-to-left direction of the vehicle, and the z-axis may indicate the up-and-down direction of the vehicle.

In addition, the reception pad 11 of the EV may be defined by different categories according to its height (defined in the z-direction) measured from the ground surface. For example, the reception pad 11 having a height of about 100-150 millimeters (mm) from the ground surface may be categorized into a class 1. The reception pad 11 having a height of about 140-210 mm may be categorized into a class 2. The reception pad 11 having a height of about 170-250 mm may be categorized into a class 3. The reception pad may support only some of the classes 1 through 3. For example, only the class 1 may be supported by the reception pad 11, or the class 1 and 2 may be supported by the reception pad 11.

The height of the reception pad measured from the ground surface may correspond to the previously defined term "vehicle magnetic ground clearance."

Meanwhile, a vertical position (i.e., position in the z-direction) of the power transmission pad 21 may be determined to be disposed between the maximum class and the minimum class supported by the power reception pad 11. For example, in case that the reception pad supports only the class 1 and 2, the vertical position of the power transmission pad 21 may be in a range between about 100 and 210 mm with respect to the power reception pad 11.

In addition, a gap between the center of the power transmission pad 21 and the center of the power reception pad 11 may be determined to be disposed within the limits of the horizontal and vertical directions (defined in the x- and y-directions). For example, the gap (e.g., Δy) may be determined to be within ± 75 mm in a lateral direction (defined in the y-direction), and within ± 100 mm in the longitudinal direction (defined in the x-direction).

The relative positions of the power transmission pad 21 and the power reception pad 11 may be varied in accordance with experimental results, and it should be noted that the numerical values mentioned above are provided as examples.

Although the alignment between the pads has been described above on the assumption that each of the transmission pad 21 and the reception pad 11 includes a coil, the alignment between the pads may be defined more specifically by an alignment between the transmission coil (or GA coil) and the reception coil (or VA coil) included in the transmission pad 21 and the reception pad 11, respectively.

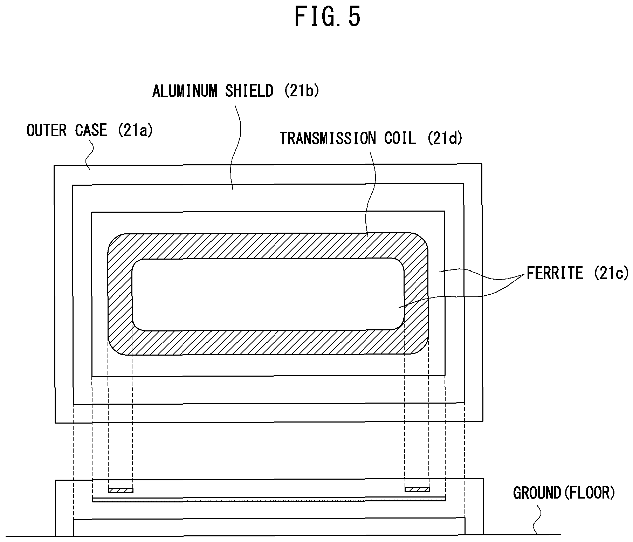

FIG. 5 is a conceptual cross sectional view and an elevation view of the power transmission pad 21 according to an example of the present disclosure.

As shown in FIG. 5, the power transmission pad 21 may include an outer case 21A forming an outer shape of the power transmission pad 21, an aluminum shield 21B having a shape of a planar plate and installed inside the outer case 21A, and a planar ferrite member 21C installed on or above the aluminum shield 21B, and a transmission coil 21D installed on or above planar ferrite member 21C. Here, "on or above" means an upward direction relative to the ground where the power transmission pad 21 is installed.

Here, the ferrite which is used for the planar ferrite member 21C is a magnetic material containing iron oxide and can play an auxiliary role in transmitting and receiving wireless power by reducing a magnetic resistance and facilitating a flow of magnetic flux.

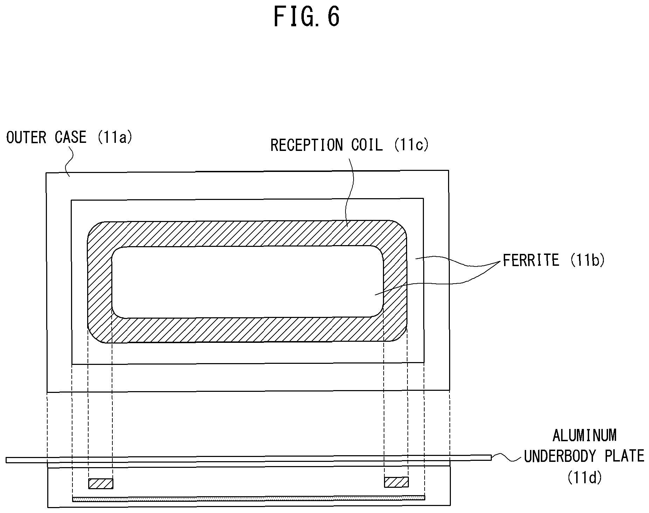

FIG. 6 is a conceptual cross sectional view and an elevation view of the power reception pad 11 according to an example of the present disclosure.

As shown in FIG. 6, the power reception pad 11 may include an aluminum underbody plate 11D disposed at the bottom of the vehicle, an outer case 11A disposed beneath the aluminum underbody plate 11D, a planar ferrite member 11B disposed inside the outer case 11A, and a reception coil 11C disposed inside the outer case 11A and under the planar ferrite member 11B (e.g., in a direction toward the ground when the power reception pad is installed under the vehicle). The planar ferrite member 11B may have a planar shape as shown in FIG. 6. The flat ferrite 11B may be arranged such that the central portion of the flat ferrite 11B faces the central portion of the reception coil 11C. However, the various examples of the present disclosure are not limited to the example of FIG. 6. For example, in another example, the central portion of the planar ferrite member 11B may protrude downward so that a side of a protruding portion faces an inner surface of the reception coil 11C, and an edge portion of the planar ferrite member 11B may be flexed downward so that a flexed edge surrounds an outer surface of the reception coil. Such a modification will be readily apparent to those skilled in the art based on the examples described in the present specification.

Contrary to the power transmission pad 21 shown in FIG. 5, the power reception pad 11 shown in FIG. 6 may not include the aluminum shield 21B.

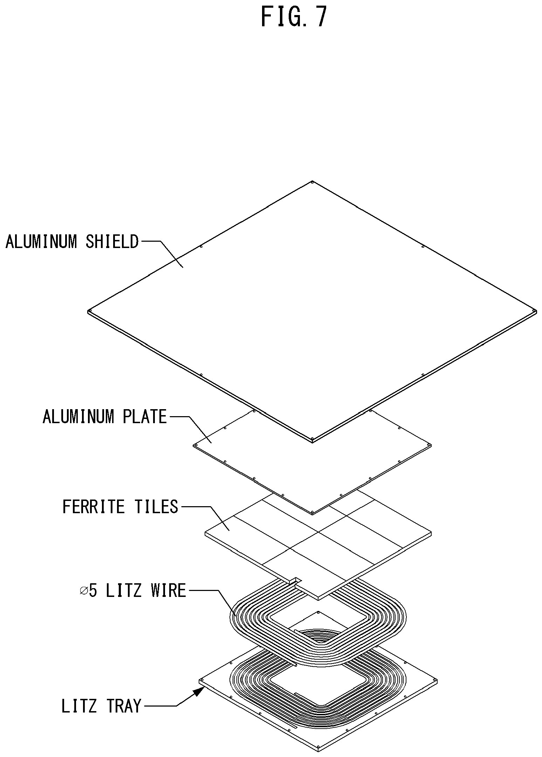

FIGS. 7 through 10 are illustrations showing a conceptual structure of the power transmission pad or the power reception pad according to an example of the present disclosure.

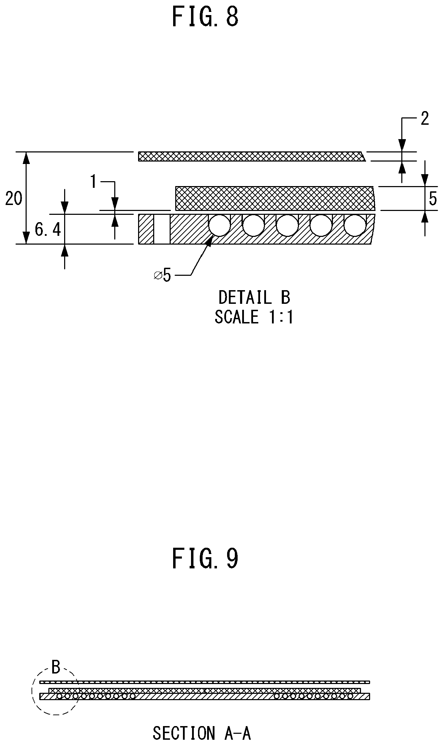

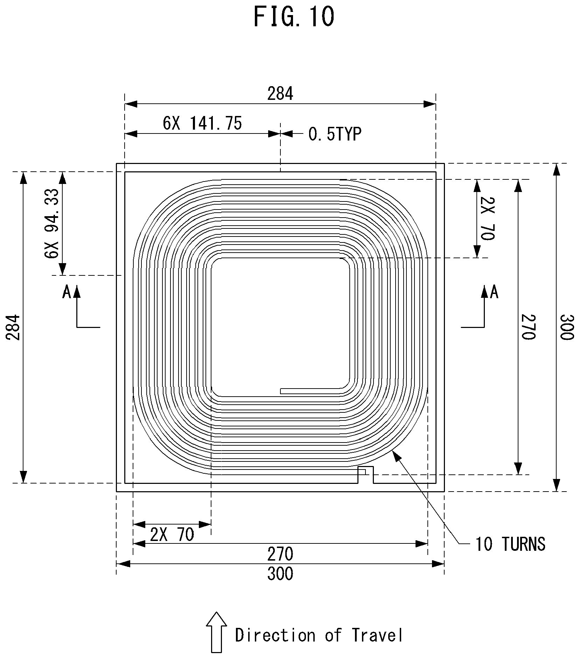

FIG. 10 is a top view of the power transmission pad or the power reception pad, FIG. 9 is a cross sectional view taken along a line A-A of FIG. 10, FIG. 8 is an elevation view of the pad, and FIG. 7 is an exploded view for explaining an overall conceptual structure of the pad.

At least part of the configuration shown in FIGS. 7-10 satisfies provisions of the industrial standard SAE J2954 and an IEC 61980-3 technical specification (TS) which are standard documents for the wireless charging of the electric vehicle.

According to the SAE J2954 standard and the IEC 61980-3 TS, the primary coil or the secondary coil of the wireless power transfer system applicable to a light-duty electric vehicle may include a litz wire and ferromagnetic material.

Compared with a regular copper wire, the litz wire is advantageous in that the current flow does not become unstable with the increase in the current, losses are small so that a stable current flow may be maintained, and the temperature of the coil rises less. Therefore, the litz wire is an appropriate material for the electric vehicle wireless power transfer system using an operating frequency of 79 to 90 kHz. Generally, the price of the litz wire is set at a price per meter. There are attempts to use the litz wire in the electric vehicle wireless power transfer system taking such characteristics of the litz wire into account.

However, the wireless power transfer system for the light-duty electric vehicle requires the litz wire with a large current capacity (e.g., at least 50A or larger), which is dozens of times more expensive than a general litz wire and may cause an increase in the manufacturing cost of the electric vehicle.

Because the electric vehicle wireless charging system transfers large amounts of electric power wirelessly, strict heat management is always important. In addition, it is important to manage the heating of foreign objects such as metal.

The electric vehicle wireless charging standard documents, SAE J2954 standard and IEC 61980-3 TS, also stipulates a criterion for acceptable heat generation in the primary and secondary coils of the electric vehicle wireless charging system.

However, due to the structure of the litz wire in which inner strands are surrounded by outer strands, it may be difficult to quickly discharge the generated heat to the outside of the litz wire. In addition, as the heat generation continues, the current loss in the litz wire increases. Therefore, it may be difficult to use the litz wire for a long period of time. As a result, the power transfer system using the litz wire needs a cooling arrangement, which increases the cost further.

Even if a cooling arrangement is added to the system, a thermal conductivity of the litz wire may be too low to quickly discharge the generated heat to the outside of the litz wire, and thus an overall cooling efficiency may be still low.

In addition, there may be some views to be considered that a supporting structure maintaining a shape of the coil made of the litz wire may impair the safety of the system.

Although the litz wire has a strength higher than the regular copper wire and facilitates to maintain a shape of the wire, the litz wire is linear-shaped, and a coil made of the litz wire may need a frame to maintain the shape of the litz wire and the coil. Such a frame is made of a dielectric with a low dielectric constant to reduce an electromagnetic influence on the operation of the coil. The dielectric with a low dielectric constant is generally vulnerable to heat, and thus is inadequate to use for a high-power charging at 22 Kilowatts (KW), for example, which generates a lot of heat. Additionally, because the frame is in contact with the litz wire, the frame may hinder a heat exchange, undergo a change in its shape during repeated heating and cooling processes, or cause a fire.

Therefore, the present disclosure provides an alternative example in addition to the example using the litz wire.

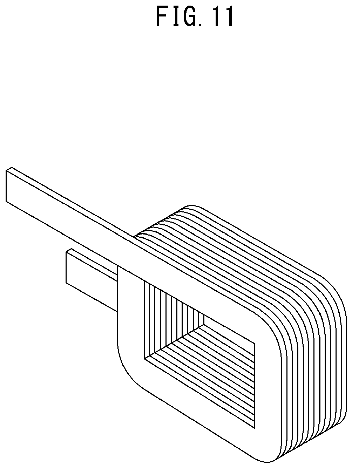

FIG. 11 is a conceptual illustration of a flat wire that may be employed in the power transmission pad or the power reception pad according to an example of the present disclosure.

The flat and rectangular wire shown in FIG. 11 may be a modification of a commercially available flat wire to adapt to the purpose of the present disclosure.

Flat wires available on the market generally have corners that are almost right-angled. These commercially available flat wires are used to increase a space factor. A wire according to an alternative example of the present disclosure maintains its flat shape has corners that are at least partially rounded.

Hereinbelow, the wire shown in FIG. 11 is referred to as a "flat wire" for convenience of explanation. However, the scope or spirit of the present disclosure should not be limited by the name. The wire proposed by the present disclosure with reference to FIGS. 11-20 has characteristics of 1) having a flat or planar shape, and 2) having sides that are partially round and/or partially rectangular. The wire according to the example of the present disclosure having such characteristics, in a state of being wound in a coil, may be a flat wire having a shape optimized to generate an electromagnetic field suitable for the wireless power transfer.

Flat and rectangular wires may be available in various sizes, for example, single or multiple strands (e.g., eight strands), thickness ranges of 1.0-1.9 millimeters (mm), and widths ranges of 3-20 mm. In addition, the rectangular wire can be wound into a coil of a continuously transposed conductor (CTC) form.

The advantage of the coil made of such a wire is that it can be used for a high voltage application, and the conductor adhesion of insulating material to the conductor is excellent enough to select and use one of diverse insulating materials such as KRAFT, THERMAL UPGRADE KRAFT, NOMEX, DENNISON, KAPTON, MICA, and CONDUCTOFOL.

If an insulation issue is solved in this way, the number of turns may be increased compared to the existing the litz wire coil, and an increase in the number of turns may enable to establish an increased magnetic flux and enhance a power transfer efficiency.

In addition, because it is essentially a single cylindrical metal structure when observed from outside, heat may be transferred quickly from the inside to the outside without any discontinuities.

Further, the litz wire has a structure that inner strands are surrounded by outer strands as mentioned above. Thus, when an internal short circuit or insulation deformation or deterioration occurs, it may be difficult to identify a location of a trouble, and partial maintenance of the wire may be impossible and the entire coil has to be replaced, which leads to an increase in maintenance costs. However, the coil structure employing the flat wire or the planar wire proposed in the present disclosure is more durable than the litz wire, and thus the troubles such as the short circuit in the wire are less likely to occur. Further, even if a trouble occurs, the location where the trouble occurred may be identified easily. Therefore, it may be possible to immediately fix the trouble, and even if the coil itself is replaced, the replacement cost is low. As a consequence, the coil structure according to the present disclosure requires much less resources for the maintenance.

Referring to the structure of the coil shown in FIG. 11, it may be possible to implement a power transmission device/pad and the power reception device/pad that may be cooled easily and reduce cooling costs.

According to an example of the present disclosure, a power transmission device/pad and a power reception device/pad can be implemented with fewer space restrictions in arranging the ferrite pad(planar ferrite member) to be magnetically coupled to the coil.

According to an example of the present disclosure, it is possible to implement a power transmission device/pad and a power reception device/pad causing fewer restrictions on space for placing the ferrite core inside the coil to be magnetically coupled to the coil.

Therefore, the size and shape of the power transmission pad or the power reception pad for the wireless power transfer may be relatively flexibly configured.

In addition, the structure of FIG. 11 has the advantage of a high heat transfer efficiency as well as a high freedom of arrangement, which enables to selectively apply various cooling techniques such as dry self-cooling, dry wind cooling, dry sealed self-cooling, inflow self-cooling, inflow wind cooling, inflow wind cooling, oil-flowing water cooling, oil-flowing wind cooling, and refrigerant cooling. Since various cooling techniques may be applied selectively or in combination, embodiment(s) of the present disclosure can have a very advantageous effect in cooling the heat generated during the power transfer.

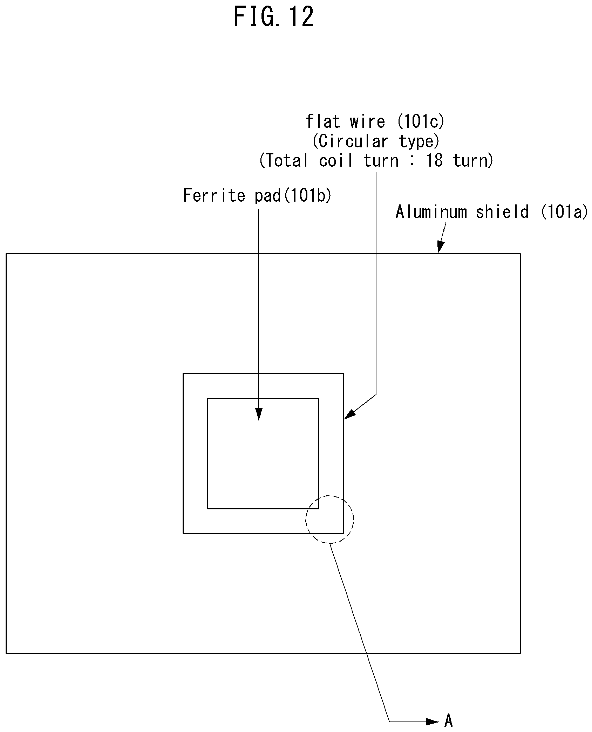

Examples of the present disclosure shown in FIGS. 12-32 which will be described below are directed to a coil for transmitting or receiving power of 22 kW or higher to an electric vehicle by the wireless power transfer and include a coil structure using the flat or planar wire of FIG. 11 along with a power circuit.

According to the examples shown in FIGS. 7-10, the litz wire is used as the primary and secondary coils to wirelessly transfer electric power to the electric vehicle. However, due to the cost and heat generated when transferring the high power, the usability of the wire may be limited for the power transfer of 22 kW or higher.

According to an alternative example to solve the problem, the primary and secondary coils may employ the flat wire or planar wire.

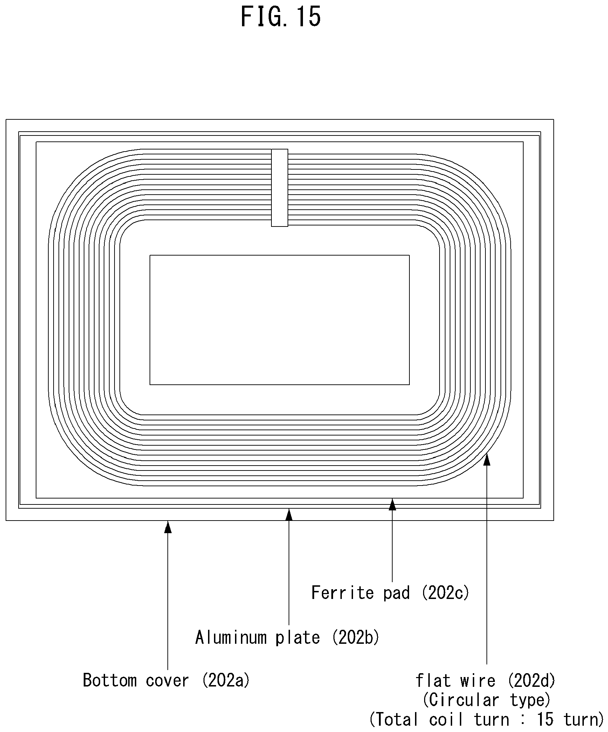

FIGS. 12-14 show an example in which the secondary coil or the reception coil is implemented using the flat wire, and FIGS. 15-20 show three examples in which the primary coil in the transmission coil is implemented using the flat wire. According to the examples, both the primary and secondary coils may be implemented using the flat wires for convenience of explanation, but the scope of the present disclosure is not limited thereto. For example, in an alternative example of the present disclosure, the secondary coil may be implemented using a coil of any other shape rather than the flat wire.

The flat wire shown in FIG. 11 may be implemented using at least one material selected from copper and copper alloy, but the scope of the present disclosure is not limited thereto, and various conductors may be used for the flat wire as well.

An aspect ratio of a cross section of the wire shown in FIG. 11 is not limited to the example shown in FIG. 11. FIG. 11 may be illustrated assuming specific dimensions for convenience of explanation and may be exaggerated, and the aspect ratio of the cross section of the wire used to form the coil of the examples of the present disclosure may be determined taking into account the power transfer efficiency, the shape of the coil, and so on.

Meanwhile, it may be advantageous for establishing an electromagnetic field near the coils to round the corners of the coil at least partially. A curvature at which the corners are rounded may also be determined taking into account the power transfer efficiency, the shape of the coil, and so on.

In an example, the coil of FIG. 11 may be implemented, based on a shape and material of a bus bar forming a conductor connected to the battery inside the electric vehicle 10, by determining an aspect ratio of a cross section of the wire and a numerical range of a curvature of the rounded corner.

Comparing the example employing the litz wire with the alternative example, although the litz wire is a technology designed to increase the ratio of surface area i.e., current path, to the cross sectional area or volume, interferences between the strands of the litz wire in a central region of the litz wire bundles where the strands are dense may reduce the power transfer efficiency and increase the generation of heat.

Since the current flows through a surface of the conductor, the ratio of the surface area to the cross sectional area may be understood to correspond to the ratio of the current path to the total volume.

Examples of the present disclosure may increase the ratio of the surface area to the cross sectional area and improve the space factor by proposing the flat wire and the coil structure shown in FIG. 11, thereby improving the power transfer efficiency.

The rounded corners may contribute to the formation of electromagnetic fields, resulting in more advantageous electromagnetic characteristics of the coil.

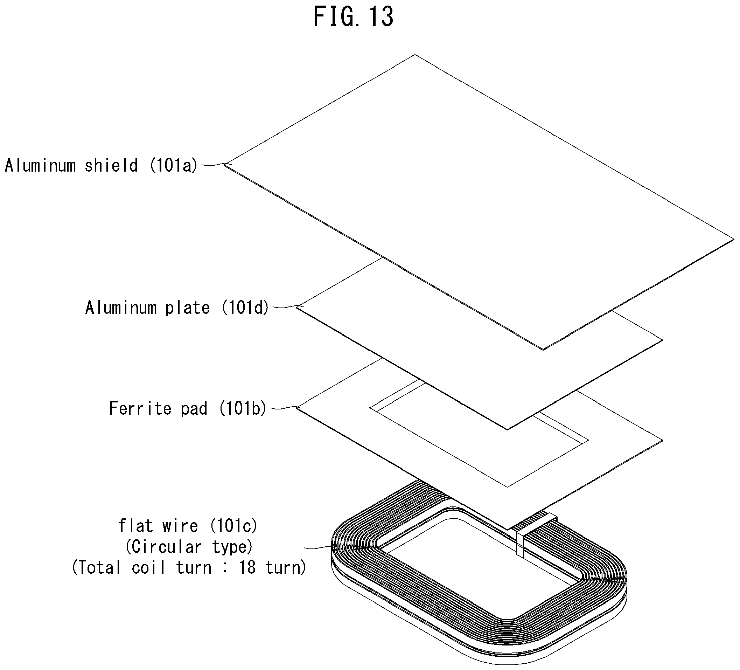

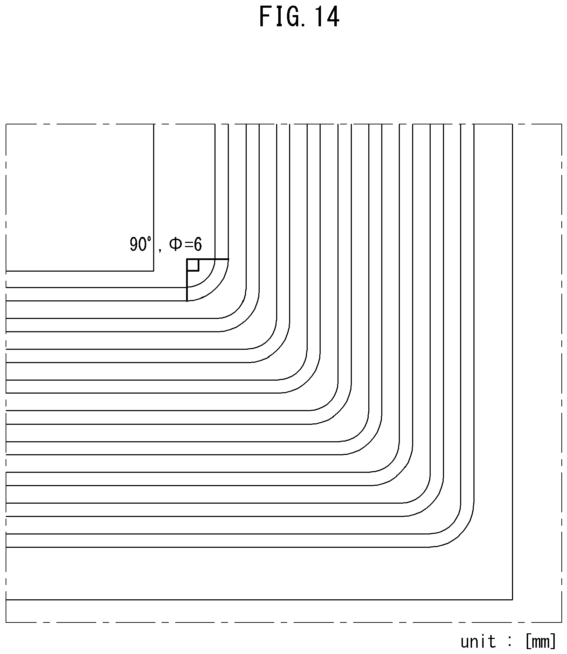

FIGS. 12-14 are illustrations of a conceptual structure of a wireless power reception pad according to an example of the present disclosure. FIG. 12 is a top/bottom view of the power reception pad 11, FIG. 13 is an exploded perspective view of the power reception pad 11, and FIG. 14 is an enlarged view of the rounded corner of the secondary coil 101C of the power reception pad 11.

The power reception pad 11 may be disposed at a bottom of the electric vehicle 10, for example.

Referring to FIGS. 12 and 13, the power reception pad 11 may include an aluminum shield 101A forming a part of an exterior housing and having a shape of a flat plate, an aluminum plate 101D disposed beneath the aluminum shield 101A, a flat ferrite pad (planar ferrite member) 101B disposed beneath the aluminum plate 101D, and a secondary coil 101C disposed below the flat ferrite pad 101B. Here, the term "beneath" refers to a downward direction of a horizontal plane or a virtual horizontal plane of the vehicle where the power reception pad 11 is installed.

The housing including the aluminum shield 101A may be implemented to support at least the secondary coil 101C and the flat ferrite pad 101B.

The secondary coil 101C may be implemented using the flat wire of FIG. 11. The secondary coil 101C may be a circular type and may be wound 18 times, but the scope of the present disclosure is not limited by the number of turns of this embodiment.

The secondary coil 101C may be implemented in a form surrounding a central space. The secondary coil 101C may include a plurality of coil elements surrounding the central space. The term "coil element" used herein refers to a winding of one turn surrounding the central space. In some examples, a single flat wire element including a plurality of coil elements may form the secondary coil 101C. For example, in case where the secondary coil 101C has the total number of turns of 18, a single flat wire element including eighteen coil elements may be used to implement the secondary coil 101C. Alternatively, two flat wire elements each of which includes nine coil elements may be used to form the secondary coil 101C. In such a case, the two flat wire elements may be electrically connected to each other. However, each of the flat wire elements may be arranged to be separated spatially in the direction of at least one of the x, y, and/or z axes. The flat wire elements may be arranged in a concentric shape that shares a central axis of the secondary coil 101C.

The corners of the cross section of the flat wire forming the secondary coil 101C may be rounded at least partially so as to establish the electromagnetic field advantageous for the wireless power transfer near the wire.

Referring to FIG. 14, an example is shown in which the corners in the top view of the secondary coil 101C are rounded to have a radius of curvature of 6 mm. Such a shape of the secondary coil 101C rounded at least partially may be helpful in establishing the electromagnetic field advantageous for the wireless power transfer near the wire.

Referring to FIG. 14, a virtual extension line extending in the x-axis direction and a virtual extension line extending in the y-axis direction of the coil elements of the secondary coil 101C may be perpendicular to each other.

Since the secondary coil 101C is made of the flat wire, the cross section of the coil element of the secondary coil 101C may have a major axis and a minor axis, and may have a shape similar to an ellipse or a rectangle having the major axis and the minor axis. In case where the major axis is arranged to be parallel with the central axis of the secondary coil 101C, the flat wire is arranged perpendicular to the ground and the coil may be referred to as vertical type coil. In case where the major axis is arranged to be perpendicular to the central axis of the secondary coil 101C, the flat wire is arranged to be parallel with the ground and the coil may be referred to as horizontal type coil. The secondary coil 101C may have the vertical type structure or the horizontal type structure.

In case where the secondary coil 101C has the vertical type structure, the length of the major axis of the cross section of the flat wire may be specified to be 10 mm with an error tolerance of 1%, for example.

In case where the secondary coil 101C includes two or more flat wire elements, each of the flat wire elements may be arranged to be spaced apart by a separation distance of at least 4.5 mm. At this time, an error in the separation distance may be specified to be less than 1%.

The flat ferrite pad (planar ferrite member) 101B may be disposed between the aluminum plate 101D and the secondary coil 101C. Assuming a horizontal plane or a virtual horizontal plane perpendicular to the central axis of the secondary coil 101C, the flat ferrite pad 101B may be arranged such that a first area into which the secondary coil 101C is projected on the virtual horizontal plane is included in a second area into which the flat ferrite pad 101B is projected on the virtual horizontal plane.

The central portion of the flat ferrite pad 101B may protrude toward the central space of the secondary coil 101C to face an inner surface of the secondary coil 101C. In addition, in some examples among various examples of the present disclosure, an edge portion of the ferrite pad 101B may be flexed downward so as to form a shape of a wall surrounding an outer surface of the secondary coil 101C. In alternative examples, however, the edge portion of the ferrite pad 101B may not be flexed downward and maintain the planar shape. In case where the flat ferrite pad 101B protrudes toward the central space of the secondary coil 101C, the protruding portion of the flat ferrite pad 101B may be specified to have a height of 10 mm from a non-protruding portion with an error tolerance of 1%.

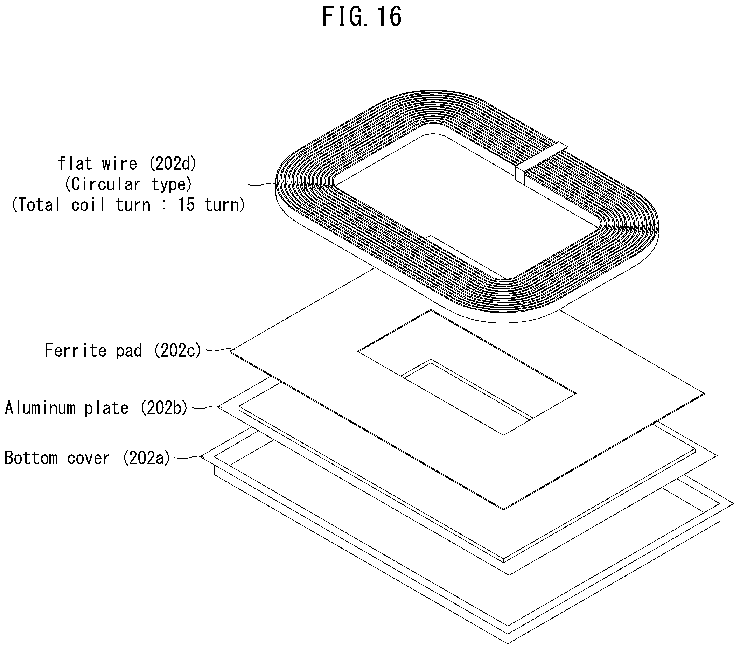

FIGS. 15 and 16 are illustrations of a conceptual structure of a wireless power transmission pad according to an example of the present disclosure.

FIG. 15 is a top view of the power transmission pad 21, and FIG. 16 is an exploded perspective view of the power transmission pad 21. The power transmission pad 21 may be placed on the ground, partially buried, or placed below the ground.

Referring to FIGS. 15 and 16, the power transmission pad 11 may include a bottom cover 202A forming a part of an exterior housing and being partially in a form of a flat plate, an aluminum plate 202B disposed on the top of the bottom cover 202A, a flat ferrite pad (planar ferrite member) 202C disposed on the top of the aluminum plate 202B, and a primary coil 202D disposed on the top of the flat ferrite pad 202C. Here, the term "on the top of" refers to an upward direction of a horizontal plane or a virtual horizontal plane on which the power transmission pad 21 is installed.

The housing including the bottom cover 202A may be implemented to support at least the primary coil 202D and the flat ferrite pad 202C.

The primary coil 202D may be implemented using the flat wire of FIG. 11. The primary coil 202D may be a circular type and may be wound 15 times, but the scope of the present disclosure is not limited by the number of turns in this embodiment.

The primary coil 202D may be implemented in a form surrounding a central space. The primary coil 202D may include a plurality of coil elements surrounding the central space. The term "coil element" used herein refers to a winding of one turn surrounding the central space. In some examples, a single flat wire element including a plurality of coil elements may form the primary coil 202D. For example, in case where the primary coil 202D has the total number of turns of 15, a single flat wire element including fifteen coil elements may be used to implement the primary coil 202D. Alternatively, three flat wire elements each of which includes five coil elements may be used to form the primary coil 202D. In such a case, the three flat wire elements may be electrically connected to each other. However, each of the flat wire elements may be arranged to be separated spatially in the direction of at least one of the x, y, and/or z axes. The flat wire elements may be arranged in a concentric shape that shares a central axis of the primary coil 202D. In the exemplary embodiment shown in FIGS. 15 and 16, the primary coil 202D is implemented by a single flat wire element including fifteen coil elements.

The corners of the cross section of the flat wire forming the primary coil 202D may be rounded at least partially so as to establish the electromagnetic field advantageous for the wireless power transfer near the wire.

The configuration of the secondary coil 101C shown in FIG. 14 in which the corners of the secondary coil 101C are rounded may also be applicable to the primary coil 202D. In this case, the radius of curvature of the corner may be adapted to the characteristics of the primary coil 202D. Such a shape of the primary coil 202D rounded at least partially may be helpful in establishing the electromagnetic field advantageous for the wireless power transfer near the wire.

Similarly to the secondary coil 101C shown in FIG. 14, a virtual extension line extending in the x-axis direction and a virtual extension line extending in the y-axis direction of the coil elements of the primary coil 202D may be perpendicular to each other.

The cross section of the coil element of the primary coil 202D may be the same as the cross section of the flat wire and may have a major axis and a minor axis. In case where the major axis is arranged to be parallel with the central axis of the primary coil 202D, the flat wire is arranged perpendicular to the ground and the coil may be referred to as vertical type coil. In case where the major axis is arranged to be perpendicular to the central axis of the primary coil 202D, the flat wire is arranged to be parallel with the ground and the coil may be referred to as horizontal type coil. An example of the primary coil 202D having the vertical type configuration is shown in FIGS. 15 and 16.

The major axis of the cross section of the flat wire in the primary coil 202D may be specified to be 20 mm with an error tolerance of 1%, for example. A horizontal separation distance between each coil element of the primary coil 202D may be specified to be 4.24 mm with an error tolerance of 1%. The minor axis of the cross section of the flat wire in the primary coil 202D may be specified to be 2 mm with an error tolerance of 1%, for example. Accordingly, the aspect ratio of the cross section is 10:1, but the present disclosure is not limited thereto.

The flat ferrite pad (planar ferrite member) 202C may be disposed between the aluminum plate 202B and the primary coil 202D. Assuming a horizontal plane or a virtual horizontal plane perpendicular to the central axis of the primary coil 202D, the flat ferrite pad 202C may be arranged such that a first area into which the primary coil 202D is projected on the virtual horizontal plane is included in a second area into which the flat ferrite pad 202C is projected on the virtual horizontal plane.

The central portion of the flat ferrite pad 202C may be implemented as a void corresponding to at least a portion of the central space of the primary coil 202D. For example, when the central space of the primary coil 202D has a size of 331 mm x 170 mm on the xy-plane, the void in the central space of the flat ferrite pad 202C may have a size of 320 mm x 160 mm. At this time, the error in each length may be specified to be less than 1%.

When the size of the primary coil 202D on the xy plane is 568mm x 407.5mm, the flat ferrite pad 202C may have a size of 600mm x 440mm on the xy plane. At this time, the error in each length may be specified to be less than 1%.

In an example shown in FIGS. 15 and 16, a vertical length (i.e., a length of the major axis of the cross section) of the vertical type flat wire coil may be constant. However, the scope of the present disclosure should not be construed as limited by this example. In another example of the present disclosure which will be disclosed below, the vertical length (the length of the major axis of the cross section) of the flat wire coil may vary depending on a measured position.

Additionally, in the example of FIGS. 15 and 16, the coil elements of the vertical type flat wire coil may have the same height (i.e. the same position in the z-axis direction or the same distance from the ferrite pad 202C) as each other. In alternative example described below, however, an example in which the heights of the coil elements of the flat wire coil may gradually change according to the distances from the center of the coil.

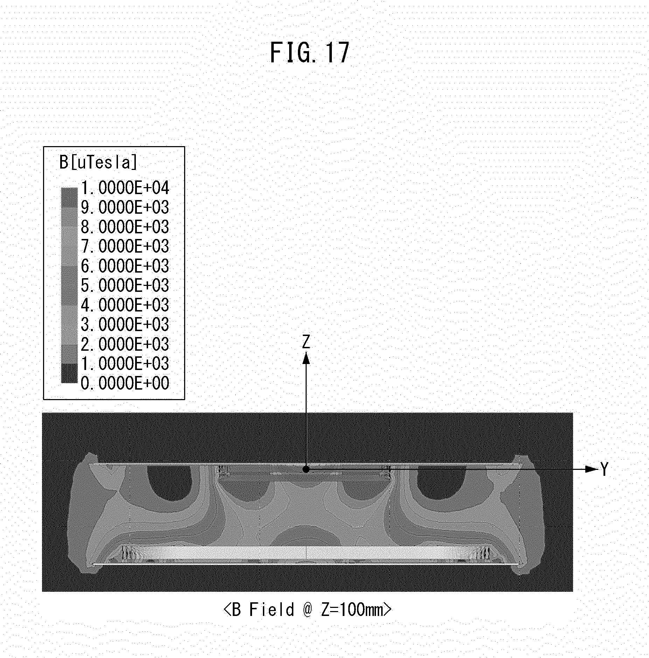

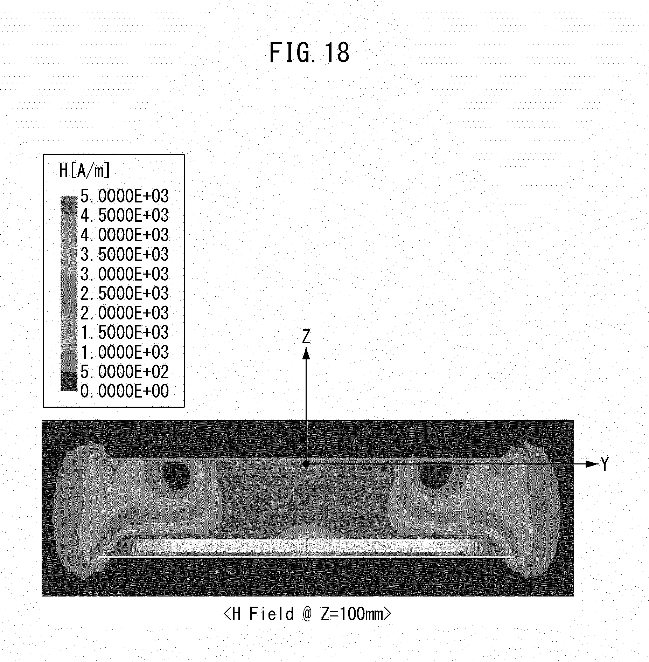

FIGS. 17 and 18 illustrate magnetic field simulation results for the coil structure of the power transmission pad according to an example of the present disclosure. FIG. 17 illustrates a simulation result of a magnetic flux (B) distribution of the coil structure according to an example shown in FIGS. 15 and 16, and FIG. 18 illustrates a simulation result of a magnetic field intensity (H) distribution of the coil structure according to an example shown in FIGS. 15 and 16.

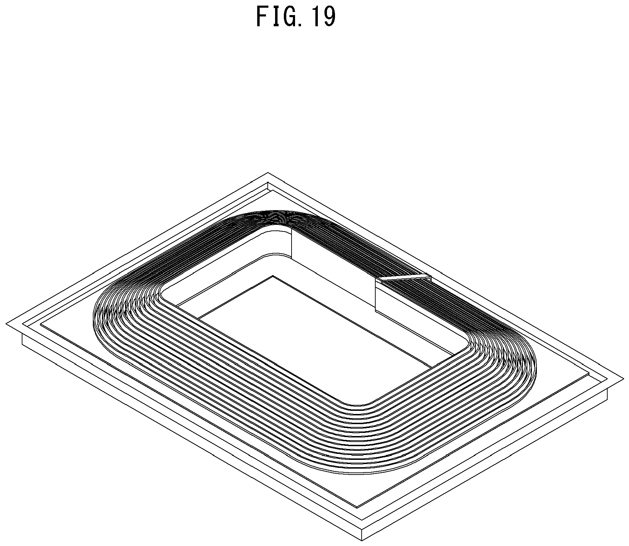

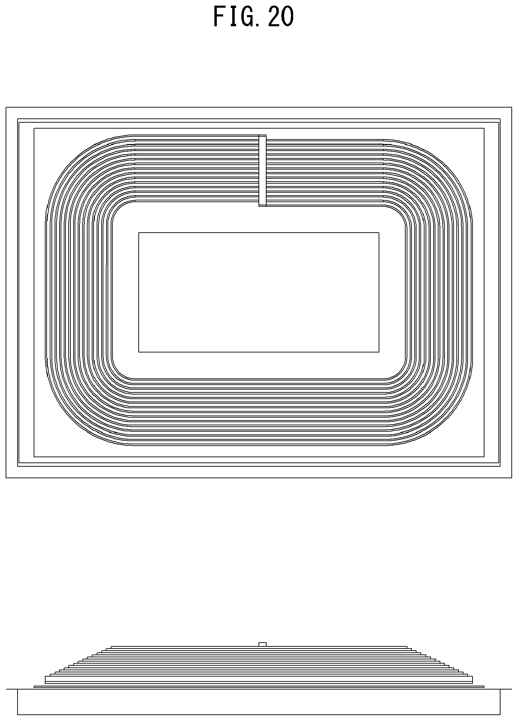

FIGS. 19 and 20 are illustrations showing a conceptual structure of the power transmission pad according to an example of the present disclosure.

FIG. 19 is a perspective view of the power transmission pad, and FIG. 20 shows a top view and a front view of the power transmission pad.

Some components shown in FIGS. 19 and 20 are similar to the components shown in FIGS. 15 and 16, and thus detailed descriptions thereof will be omitted for simplicity.

In the example of FIGS. 19 and 20, the coil elements may form windings of fifteen turns. The length of major axis of the cross section of the coil element may be 10 mm with an error tolerance of 1%, for example. In the example of FIGS. 19 and 20, an outermost end of an outermost coil element may have a gap of 3 mm, with an error tolerance of 1%, from the ferrite pad in the z-axis direction. Each portion of the coil element other than that in an outermost coil element may be placed at a position as high as 2.85 mm, with an error tolerance of 1%, in the z-axis direction compared with a corresponding portion of an outer adjacent coil element. The further inside the coil element is, the higher the coil element is placed in the z-axis direction, and the distance to the coil element from the ferrite pad gets larger. In case that there are fifteen coil elements (i.e., fifteen turns) in the coil as mentioned above, an innermost end of an innermost coil element may be placed as much as 40 mm higher (farther from the ferrite pad) than the outermost end of the outermost coil element, and a height from a lowermost edge of the outermost coil element to an uppermost edge of the innermost coil element in the front view of FIG. 20 may be 50 mm, with an error tolerance of 1%.

In the example shown in FIGS. 19 and 20, the vertical length (the length of the major axis of the cross section) of the vertical type flat wire coil is uniform, and the coil elements have a structure that coil elements rise gradually as they get closer to the center of the coil. For convenience of explanation, this structure will be referred to as a vertically ascending coil structure with uniform flat wire width.

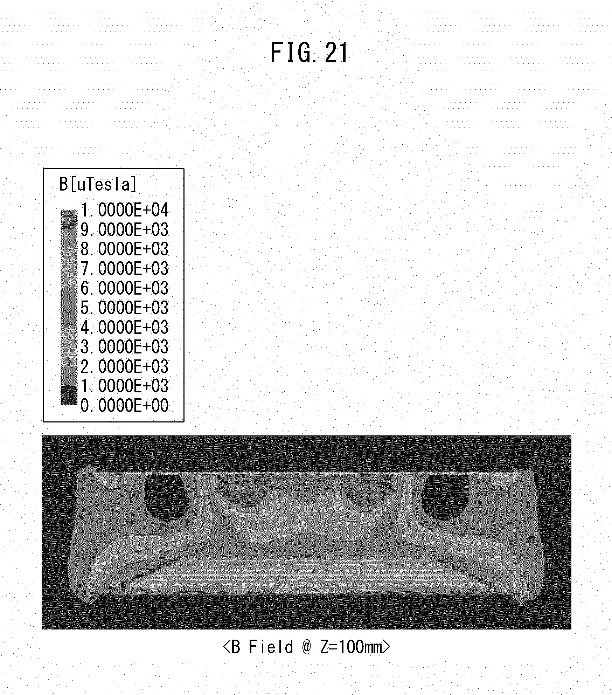

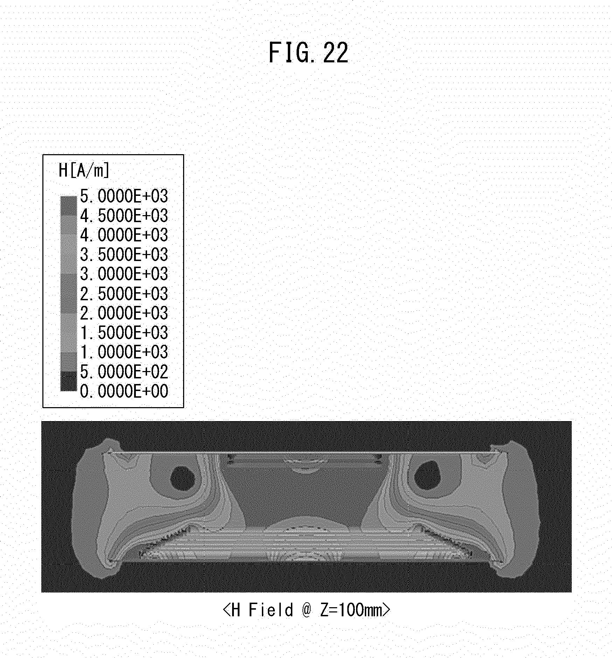

FIGS. 21 and 22 illustrate magnetic field simulation results for the coil structure of the power transmission pad according to an example of the present disclosure. FIG. 21 illustrates a simulation result of a magnetic flux (B) distribution of the coil structure according to an example shown in FIGS. 19 and 20, and FIG. 22 illustrates a simulation result of a magnetic field intensity (H) distribution of the coil structure according to an example shown in FIGS. 19 and 20.

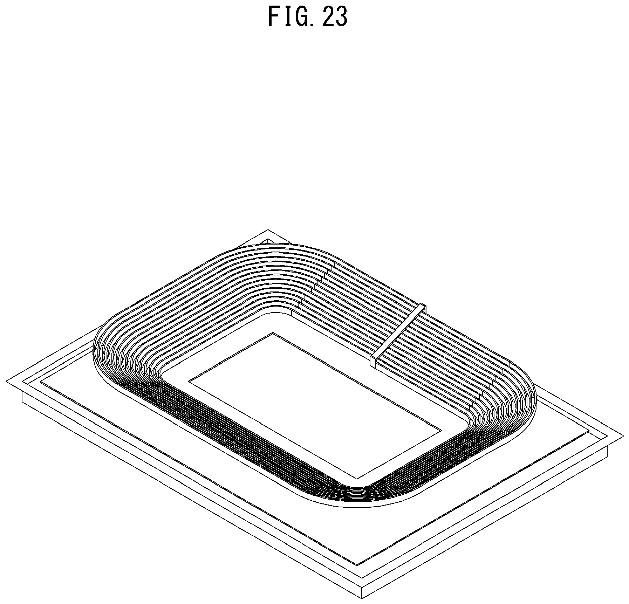

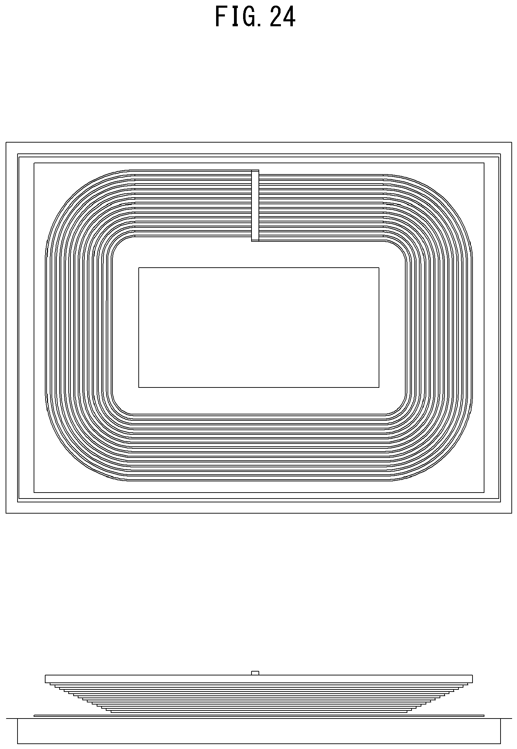

FIGS. 23 and 24 are illustrations showing a conceptual structure of the power transmission pad according to an example of the present disclosure.

FIG. 23 is a perspective view of the power transmission pad, and FIG. 24 shows a top view and a front view of the power transmission pad.

Some components shown in FIGS. 23 and 24 are similar to the components shown in FIGS. 15 and 16, and thus detailed descriptions thereof will be omitted for simplicity.

In the example of FIGS. 23 and 24, the coil elements may form windings of fifteen turns. The length of major axis of the cross section of the coil element may be 10 mm wide with an error tolerance of 1%, for example. In the example of FIGS. 19 and 20, an innermost end of an innermost coil element may have a gap of 3 mm, with an error tolerance of 1%, from the ferrite pad in the z-axis direction. Each portion of the coil element other than that in the innermost coil element may be placed at a position as high as 2.85 mm, with an error tolerance of 1%, in the z-axis direction compared with a corresponding portion of an inner adjacent coil element. The further outside the coil element is, the higher the coil element is placed in the z-axis direction, and the distance to the coil element from the ferrite pad gets larger. In case that there are fifteen coil elements (i.e., fifteen turns) in the coil element as mentioned above, the outermost end of the outermost coil element may be placed as much as 40 mm higher (farther from the ferrite pad) than the outermost end of the outermost coil element, and a height from a lowermost edge of the innermost coil element to an uppermost edge of the outermost coil element in the front view of FIG. 24 may be 50 mm, with an error tolerance of 1%.

In the example shown in FIGS. 23 and 24, the vertical (the length of the major axis of the cross section) of the vertical type flat wire coil is uniform, and the coil elements have a structure that coil elements descend gradually as they get closer to the center of the coil. For convenience of explanation, this structure will be referred to as a vertically descending coil structure with uniform flat wire width.

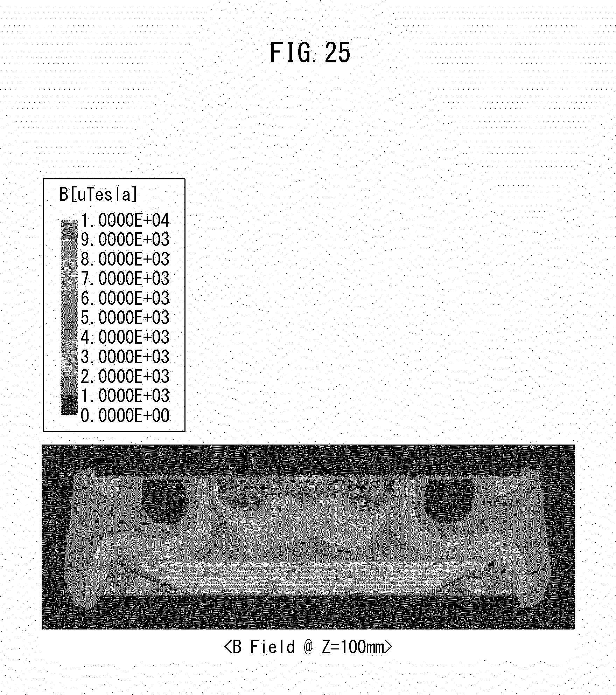

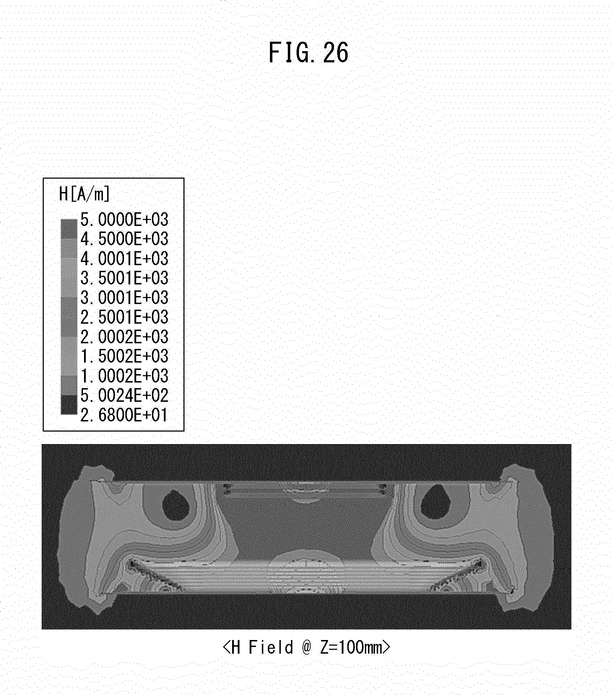

FIGS. 25 and 26 illustrate magnetic field simulation results for the coil structure of the power transmission pad according to an example of the present disclosure. FIG. 25 illustrates a simulation result of a magnetic flux (B) distribution of the coil structure according to an example shown in FIGS. 23 and 24, and FIG. 26 illustrates a simulation result of a magnetic field intensity (H) distribution of the coil structure according to an example shown in FIGS. 23 and 24.

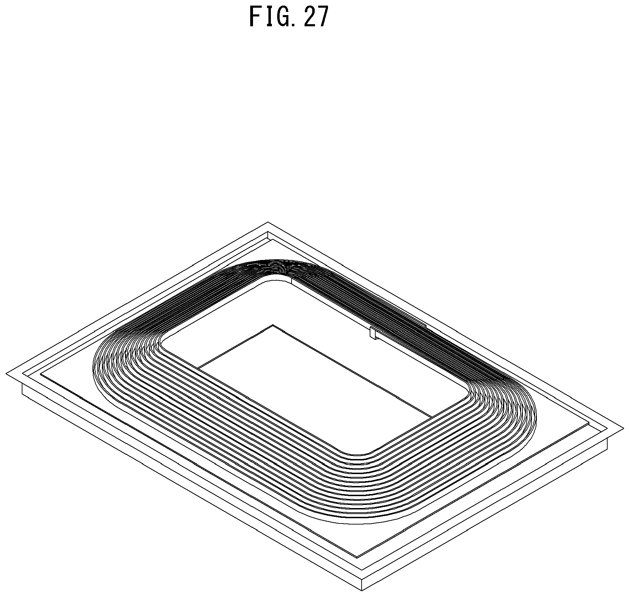

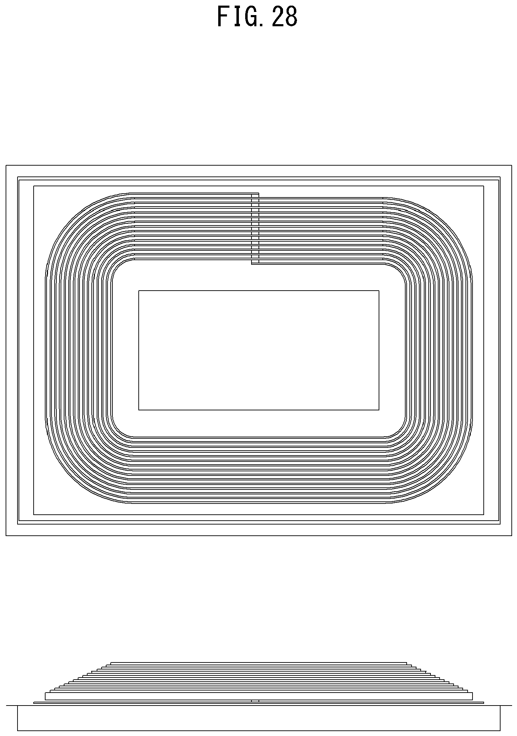

FIGS. 27 and 28 are illustrations showing a conceptual structure of the power transmission pad according to an example of the present disclosure.

FIG. 27 is a perspective view of the power transmission pad, and FIG. 28 shows a top view and a front view of the power transmission pad.

Some components shown in FIGS. 27 and 28 are similar to the components shown in FIGS. 15 and 16, and thus detailed descriptions thereof will be omitted for simplicity.

In the example of FIGS. 27 and 28, the coil elements may form windings of fifteen turns. The length of the major axis of the cross section of an outermost coil element (i.e., the vertical length of the coil element) may be 10 mm at its outermost end with an error tolerance of 1%, for example. The length of the major axis of the cross section of the coil element at an arbitrary position may be larger by 2.85 mm than a corresponding position of an outer adjacent coil element. The coil elements may be disposed such that each coil element may maintain a gap of 3 mm, with an error tolerance of 1%, from the ferrite pad in the z-axis direction.

Since the vertical length of the coil element at an arbitrary position may be larger by 2.85 mm than a corresponding position of the outer adjacent coil element, an uppermost edge of a portion of the coil element other than that in the outermost coil element may be placed at a position as high as 2.85 mm, with an error tolerance of 1%, in the z-axis direction compared with an outer adjacent portion of the coil element. A height from a lowermost edge of the outermost coil element to an uppermost edge of the innermost coil element in the front view of FIG. 28 may be 50 mm, with an error tolerance of 1%.

In the example shown in FIGS. 27 and 28, the vertical length (the length of the major axis of the cross section) of the vertical type flat wire coil gradually increases and the coil elements rise apparently as they get closer to the center of the coil. For convenience of explanation, this structure will be referred to as a vertically ascending coil structure with varying flat wire width.

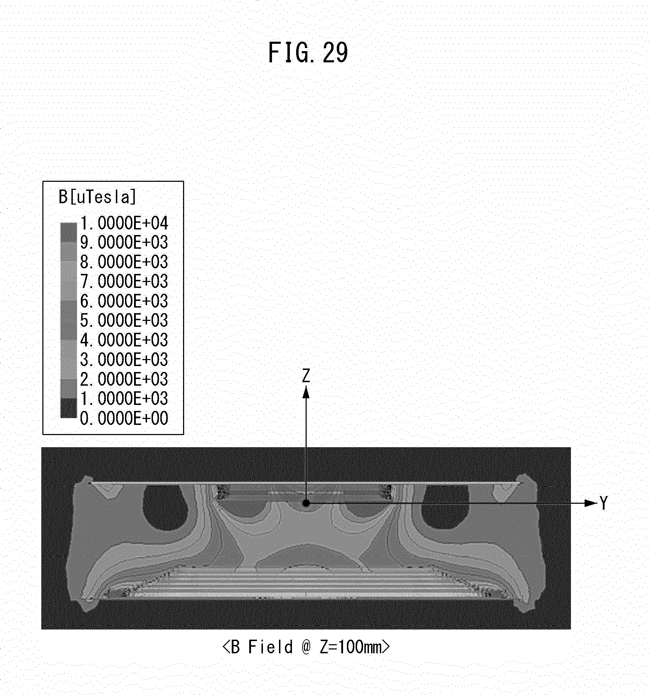

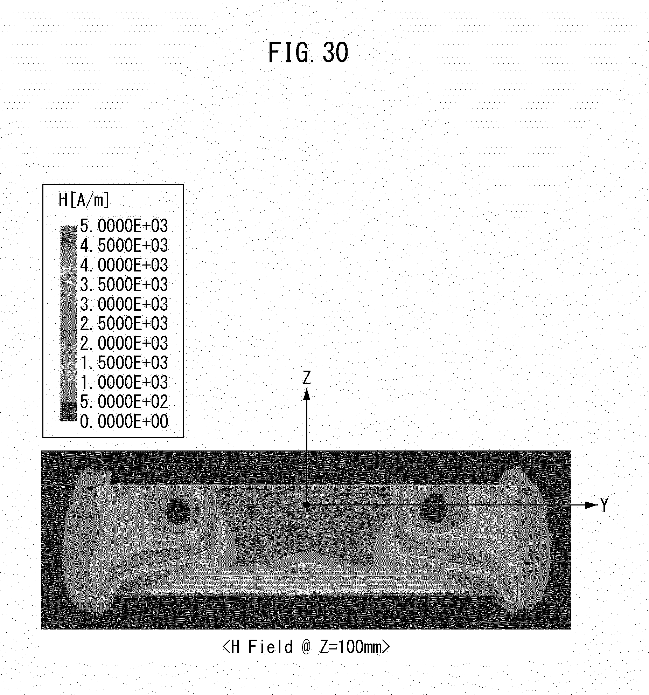

FIGS. 29 and 30 illustrate magnetic field simulation results for the coil structure of the power transmission pad according to an example of the present disclosure. FIG. 29 illustrates a simulation result of a magnetic flux (B) distribution of the coil structure according to an example shown in FIGS. 27 and 28, and FIG. 30 illustrates a simulation result of a magnetic field intensity (H) distribution of the coil structure according to an example shown in FIGS. 27 and 28.

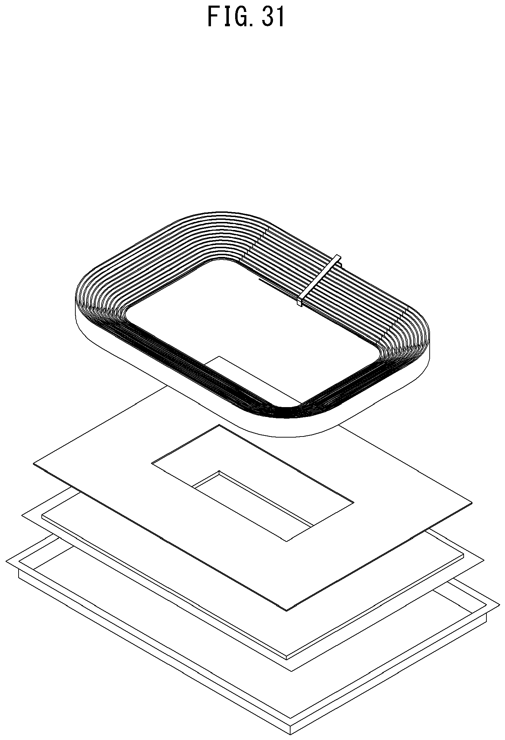

FIGS. 31 through 33 are illustrations showing a conceptual structure of the power transmission pad according to an example of the present disclosure.

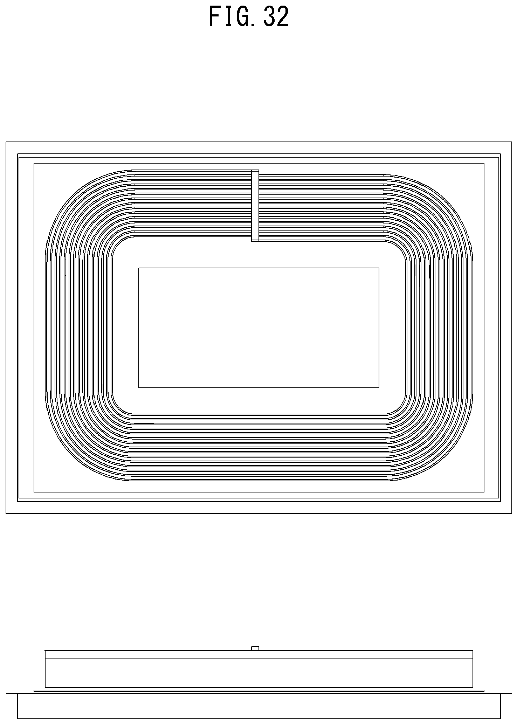

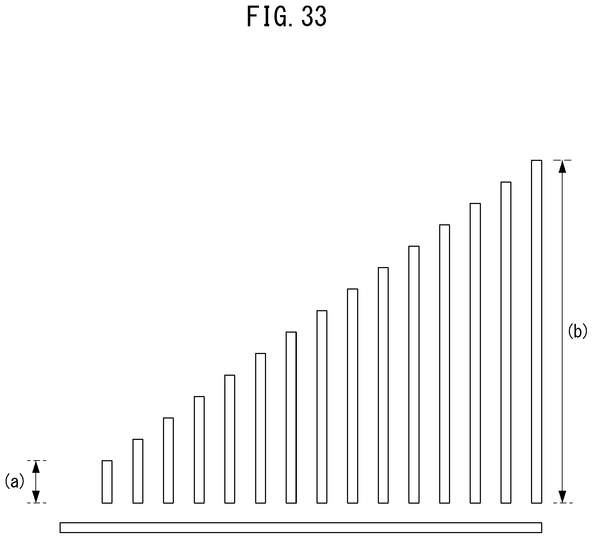

FIG. 31 is an exploded view of the power transmission pad, and FIG. 32 shows a top view and a front view of the power transmission pad. FIG. 33 is a cross-sectional view of a portion of the transmission coil structure.

Some components shown in FIGS. 31-33 are similar to the components shown in FIGS. 15 and 16, and thus detailed descriptions thereof will be omitted for simplicity.

In the example of FIGS. 31-33, the coil elements may form windings of fifteen turns. The length of the major axis of the cross section of an outermost coil element (i.e., the vertical length of the coil element) may be 50 mm at its outermost end with an error tolerance of 1%, for example. The length of the major axis of the cross section of an innermost coil element (i.e., the vertical length of the coil element) may be 10 mm at its innermost position with an error tolerance of 1%, for example. The coil elements may be disposed such that all the coil elements from the innermost coil element to the outermost coil element may maintain a gap of 3 mm, with an error tolerance of 1%, from the ferrite pad in the z-axis direction.

Since the vertical length of the coil element at an arbitrary position may be larger by 2.85 mm than a corresponding position of the inner adjacent coil element, an uppermost edge of a portion of the coil element other than that in the outermost coil element may be placed at a position as high as 2.85 mm, with an error tolerance of 1%, in the z-axis direction compared with an outer adjacent portion of the coil element. A height from a lowermost edge of the innermost coil element to an uppermost edge of the outermost coil element in the exploded view of FIG. 31 or the front view of FIG. 32 may be 50 mm, with an error tolerance of 1%.

In the example shown in FIGS. 31-33, the vertical length (the length of the major axis of the cross section) of the vertical type flat wire coil gradually increases as it gets farther from the center of the coil, and the coil elements descend apparently as they get closer to the center of the coil. For convenience of explanation, this structure will be referred to as a vertically descending coil structure with varying flat wire width.

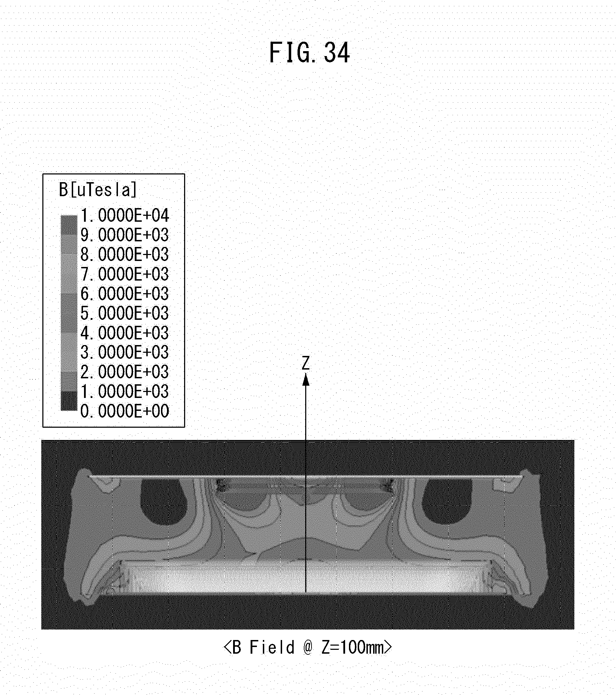

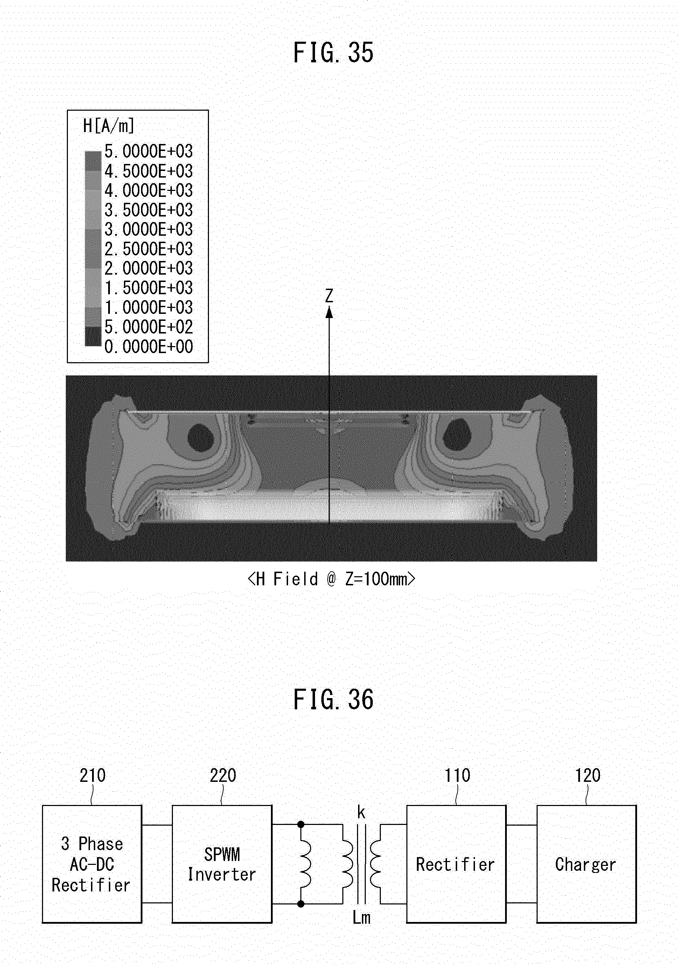

FIGS. 34 and 35 illustrate magnetic field simulation results for the coil structure of the power transmission pad according to an example of the present disclosure. FIG. 34 illustrates a simulation result of a magnetic flux (B) distribution of the coil structure according to an example shown in FIGS. 31-33, and FIG. 35 illustrates a simulation result of a magnetic field intensity (H) distribution of the coil structure according to an example shown in FIGS. 31-33.

According to the examples shown in FIGS. 15-35, the coil is comprised of a single flat wire element which includes a plurality of coil elements. In alternative examples, the coil may be implemented to include two or more flat wire elements, provided separately, each of which includes a plurality of coil elements. The two or more flat wire elements may be arranged vertically such that one of the flat wire elements are disposed above another one of the flat wire elements. For example, two flat wire elements having uniform widths shown in FIGS. 15-18 may be disposed at upper and lower positions, respectively, with a certain separation distance therebetween.

In another example of the present disclosure, the flat wire elements of the vertically ascending coil structure with uniform flat wire width shown in FIGS. 19-22 may be disposed at the upper and lower positions with a certain separation distance therebetween. In another example of the present disclosure, the flat wire elements of the vertically descending coil structure with uniform flat wire width shown in FIGS. 23-26 may be disposed at the upper and lower positions with a certain separation distance therebetween.

In another example of the present disclosure, the flat wire elements may be disposed at the upper and lower positions. In this case, the flat wire element disposed at the upper position may have the vertically ascending coil structure with uniform flat wire width shown in FIGS. 19-22. The flat wire element disposed at the lower position may have the vertically ascending structure with varying flat wire width shown in FIGS. 27-30.

In another example of the present disclosure, the flat wire elements may be disposed at the upper and lower positions. In this case, the flat wire element disposed at the upper position may have vertically descending coil structure with uniform flat wire width shown in FIGS. 23-26. The flat wire element disposed at the lower position may have the vertically descending coil structure with varying flat wire width shown in FIGS. 31-35.

Each of the two flat wire elements disposed at the upper and lower positions may be arranged to surround the central space or the central axis of the primary coil. The two vertical type flat wire elements may form a concentric structure sharing their central axes with each other and may be disposed at the same position on the xy plane. The two vertical type flat wire elements may be arranged to be spaced apart from each other by a certain separation distance. For example, the separation distance in the z-axis direction between the flat wire elements may be 4 mm with an error tolerance of 1%.

In another example of the present disclosure, three or more flat wire elements may be arranged to be spaced apart from each other by a certain distance.

According to the examples shown in FIGS. 15-35, a cross section of the coil may be the same as the cross section of a single flat wire. In alternative examples, the cross section of the coil may be the same as the cross section of a plurality of flat wires arranged in close contact like bus bars. These modifications will be readily apparent to those skilled in the art based on the present description.

In the examples shown in FIGS. 15-35, the separation distance in the z-axis direction between the flat ferrite pad and the aluminum plate may be 2.7 mm with an error tolerance of 1%.

Although exemplary embodiment(s) are depicted with specific shapes and numbers in FIGS. 12-36, the scope of the present disclosure should not be construed as being limited to such embodiment(s). Detailed shapes and numbers may be appropriately modified within the spirit and scope of the present disclosure, and the alterations and modifications within the scope of equivalents that may be derived from the present description are to be construed to be included within the scope of present disclosure.

The magnetic field simulation results shown in FIGS. 17, 18, 21, 22, 25, 26, 29, 30, 32, and 33 are depicted with respect to a virtual y-z plane. It can be seen in the drawings that the magnetic field intensities are maximum at the center of the coil.

The magnetic field simulation results shown in FIGS. 17, 18, 21, 22, 25, 26, 29, 30, 32, and 33 commonly show similar magnetic flux (B) distributions and magnetic field intensity (H) distributions, and it is to be understood that the power transmission pads according to various alternative examples shown in the drawings reveal the electromagnetic properties equivalent to each other. Although the above description was focused on the examples having the flat ferrite structure, but it will be apparent to those skilled in the art that embodiments in which a ferrite core is formed in the central space of the coil are within the scope of the present disclosure.

FIG. 36 is a block diagram illustrating a conceptual structure of a power transfer circuit for the wireless power transfer according to an example of the present disclosure.

The magnetic/inductive coupling or resonance structure formed between the primary coil and the secondary coil 101C shown in FIGS. 12-35 may be equivalently represented by a transformer shown in FIG. 36.

Referring to FIG. 36, a three-phase AC-DC rectifier circuit 210 and a sinusoidal pulse width modulation (SPWM) inverter 220 for applying an alternating current power to the primary coil may be disposed on a side of the primary coil.

Referring also to FIG. 36, a rectifier 110 and a charger 120 for transferring the power from the secondary coil 101C to the load/battery may be disposed on a side of the secondary coil.

A first technical feature of the power transfer circuit according to an example of the present disclosure is its structure including the three-phase AC-DC rectification circuit 210 and the SPWM inverter 220 on the side of the primary coil.

A second technical feature of the power transfer circuit according to an example of the present disclosure is a proportional integral (PI) control structure based on a measurement on the three-phase AC-DC rectification circuit 210 to control the three-phase AC-DC rectification circuit 210 and the SPWM inverter 220 applying the alternating current power to the primary coil. The power transfer circuit of FIG. 36 may be implemented to include a coil having an equivalent inductance of Lₘ between the primary side and the secondary side, and to have a coupling coefficient k between the primary side and the secondary side.

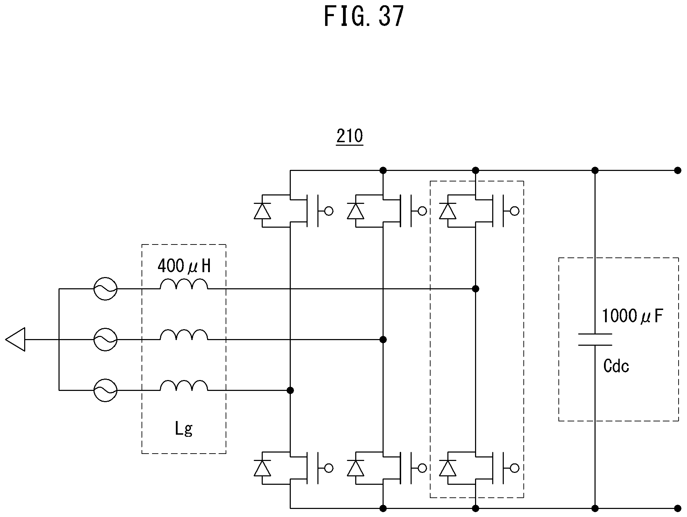

FIG. 37 is a circuit diagram illustrating a conceptual structure of an example of the three-phase AC-DC rectification circuit 210 shown in FIG. 36.

Due to a rectification operation, a peak voltage equal to the peak voltage of each phase of the three-phase input may be applied between two terminals of the capacitor C_{dc}. As a result of the rectification, a unidirectional current flows through the capacitor C_{dc}, and the current through the capacitor C_{dc} reaches a peak when a voltage among the three-phase inputs reaches a peak. The three-phase AC-DC rectification circuit 210 may generate the voltage across the terminals of the capacitor C_{dc} as an output voltage to supply to the input of the SPWM inverter 220.

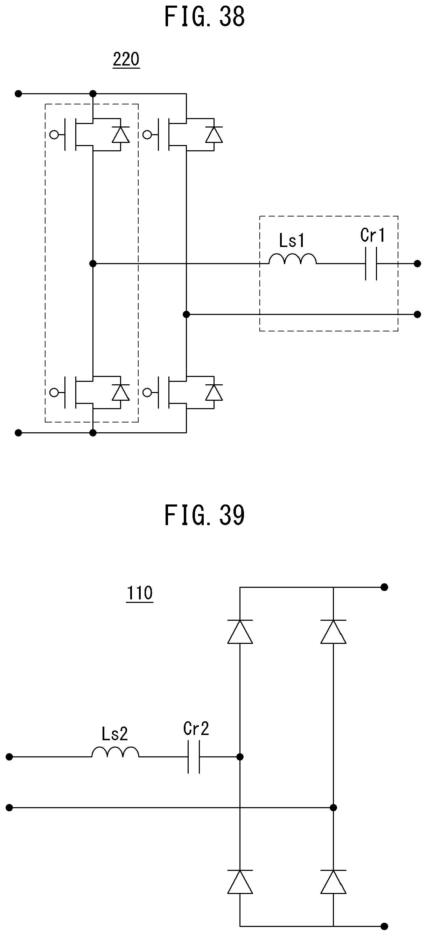

FIG. 38 is a circuit diagram illustrating a conceptual structure of an example of the SPWM inverter 220 shown in FIG. 36.

Referring to FIG. 23, the SPWM inverter 220 may receive the output of the three-phase AC-DC rectification circuit 210, generate an alternating current voltage signal, and output the alternating current voltage as an output to the primary coils 201D, 202D, and 203D. The SPWM inverter 220 may include an inductor Lₛ₁ and a capacitor Cᵣ₁ on the primary side.

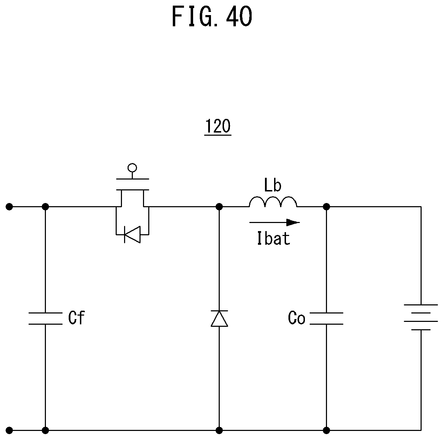

FIG. 39 is a circuit diagram illustrating a conceptual structure of an example of the rectifier 110 shown in FIG. 36. FIG. 40 is a circuit diagram illustrating a conceptual structure of an example of the charger 120 shown in FIG. 36. An inductor Lₛ₂ and a capacitor Cᵣ₂ may be included on the secondary side as shown in FIG. 39.

The inductor Lₛ₁ and the capacitor Cᵣ₁ shown in FIG. 38, the inductor Lₛ₂, the capacitor Cᵣ₂, and diodes shown in FIG. 39, and capacitors C_{f} and C_{c} and an inductor L_{b} shown in FIG. 40 may be implemented by lumped elements as shown in the drawing, or may be implemented by equivalent circuits.

A direct current voltage may be supplied to the battery to charge the battery by the operation of the rectifier 110 and the charger 120.

The power transfer circuit shown in FIGS. 26-40 may be controlled by a controller including a phase locked loop (PLL) circuit based on grid phase information of FIG. 36 and FIG. 37, a grid current conversion circuit, an output voltage (Vdc) controller, an IL current controller, a DQ-abc inverse conversion circuit, a pulse-width-modulation (PWM) output circuit, and so on.

The PLL circuit may detect an input of each phase, i.e. grid voltages vg,a, vg,b, and vg,c, and extract the grid phase value using a phase locked loop based on the grid voltages. The grid voltage information is first converted into a q-axis grid voltage vg,q through the abc-DQ domain conversion circuit, and then provided to a feedback loop through the PI controller.

The grid current conversion circuit may receive grid currents in the abc domain to convert into currents in the DQ domain using the grid phase value from the PLL circuit. The process of converting the currents into the DQ domain can be understood to correspond to a process of converting an alternating current signal to a direct current signal or converting a three-phase signal to a single-phase signal in order to use the PI control technique subsequently in the output voltage (Vdc) controller and the IL current controller.

The Vdc voltage controller forms an outer loop and can control the Vdc voltage of an output stage. At this time, the input signal of the internal PI controller may be generated using the output voltage Vdc measured in the circuits of FIGS. 36-40 and a voltage control command Vdc*.

The Vdc voltage controller may generate current control commands iL,d* and iq,d* reflecting a state of the output voltage Vdc and the voltage control command Vdc* using the PI control technique.

The IL current controller may control the grid voltage and/or grid current (i.e., generate a control reference) by the internal PI control module based on the d-axis current and q-axis current of the grid current converted to the direct current signal or the single-phase signal. The d-axis current and q-axis current of the grid current may be values obtained by the grid current conversion circuit from the three-phase grid current measured in the circuits of FIGS. 36-40.

The IL current controller may include parallel control paths provided for the d-axis and q-axis. The inputs of the internal PI control module may include the d-axis current control command, a converted d-axis current measurement value, the q-axis current control command, and the converted q-axis current measurement value.

Signals converted through impedance calculations for each of the d-axis current and the q-axis current are supplied to an output terminal of the internal PI control module, and the voltage control command vff* may be supplied additionally to the d-axis control path. Output reference signals supplied to the DQ-abc inverse conversion circuit by the IL current controller 340 may be generated for each of the d-axis and the q-axis, which may be labeled as VIref,d and VIref,q, respectively.

The DQ-abc inversion circuit may perform an inverse conversion of control information of the DQ domain into three-phase (abc) signals using the grid phase information obtained by the PLL circuit. In addition, the DQ-abc inversion circuit may perform an inverse conversion of the direct current signals from the IL current controller 340 into the alternating current signal. Such an inverse conversion process is necessary to generate a reference signal needed to generate an AC-DC rectifier PWM signal.

The PWM output circuit may include a comparator, which compares the reference signal obtained through the inverse conversion with a triangular wave. The PWM output circuit 360 may output PWM signal derived by the comparator as the AC-DC rectifier PWM signal.

In some examples, the conversion circuits may be provided for each of the grid current and grid voltage in the controller circuit. If the output signals of the grid current conversion circuit 320 are iL,d and iL,q, the output signals of the grid voltage conversion circuit may be labeled as vg,d and vg,q.

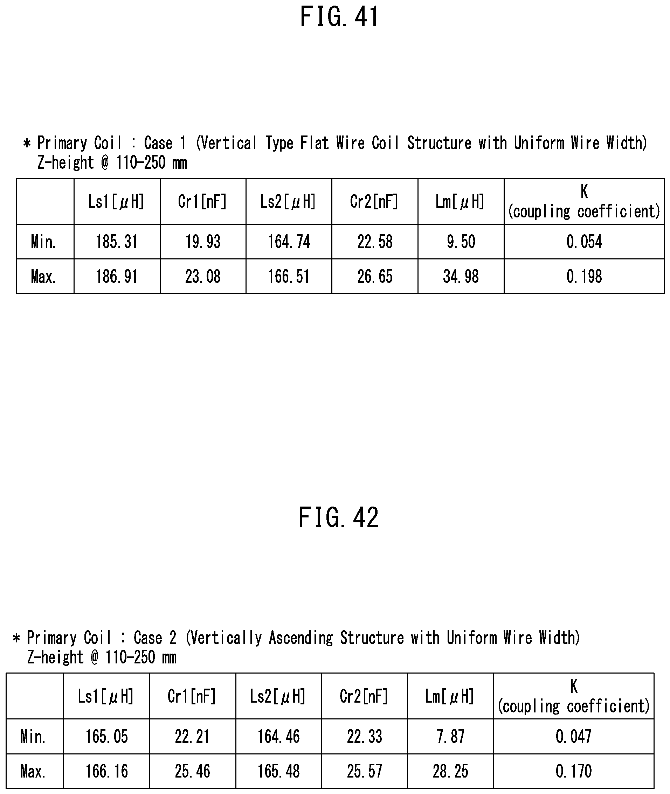

FIG. 41 is a table summarizing an example of parameters of the power transfer circuit corresponding to the examples of FIGS. 15-18.

The table of FIG. 41 includes parameter values of the power transfer circuit in the vertical type flat wire primary coil structure in which the width and the height of the flat wire are uniform in case where a Z height (i.e., a distance in the z-axis direction between the primary coil and the secondary coil) is in a range of 100-250 mm.

FIG. 42 is a table summarizing an example of parameters of the power transfer circuit corresponding to the examples of FIGS. 19-22.

The table of FIG. 42 includes parameter values of the power transfer circuit in the vertically ascending structure with uniform flat wire width in case where the Z height (i.e., the distance in the z-axis direction between the primary coil and the secondary coil) is in a range of 100-250 mm.

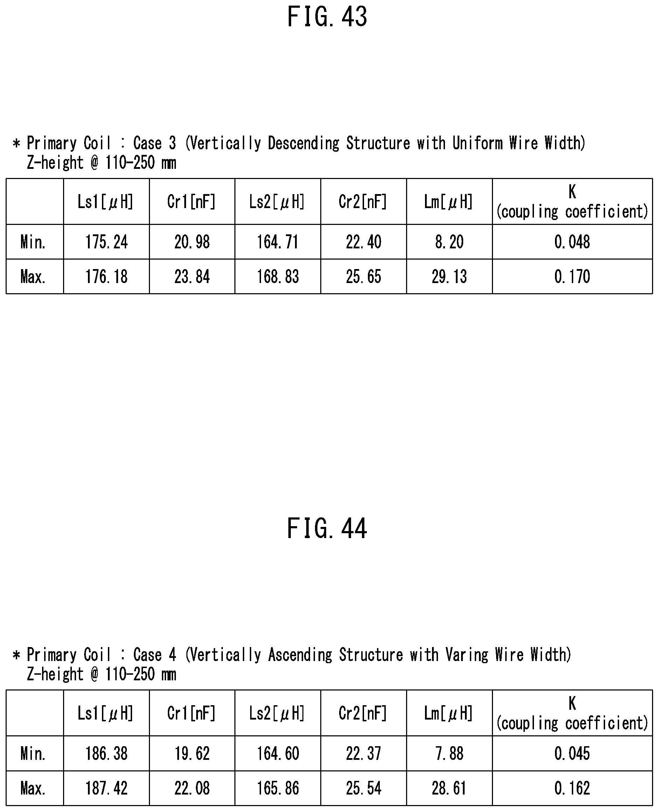

FIG. 43 is a table summarizing an example of parameters of the power transfer circuit corresponding to the examples of FIGS. 23-26.

The table of FIG. 43 includes parameter values of the power transfer circuit in the vertically descending structure with uniform flat wire width in case where the Z height (i.e., the distance in the z-axis direction between the primary coil and the secondary coil) is in a range of 100-250 mm.

FIG. 44 is a table summarizing an example of parameters of the power transfer circuit corresponding to the examples of FIGS. 27-30.

The table of FIG. 44 includes parameter values of the power transfer circuit in the vertically ascending structure with varying flat wire width in case where the Z height (i.e., the distance in the z-axis direction between the primary coil and the secondary coil) is in a range of 100-250 mm.

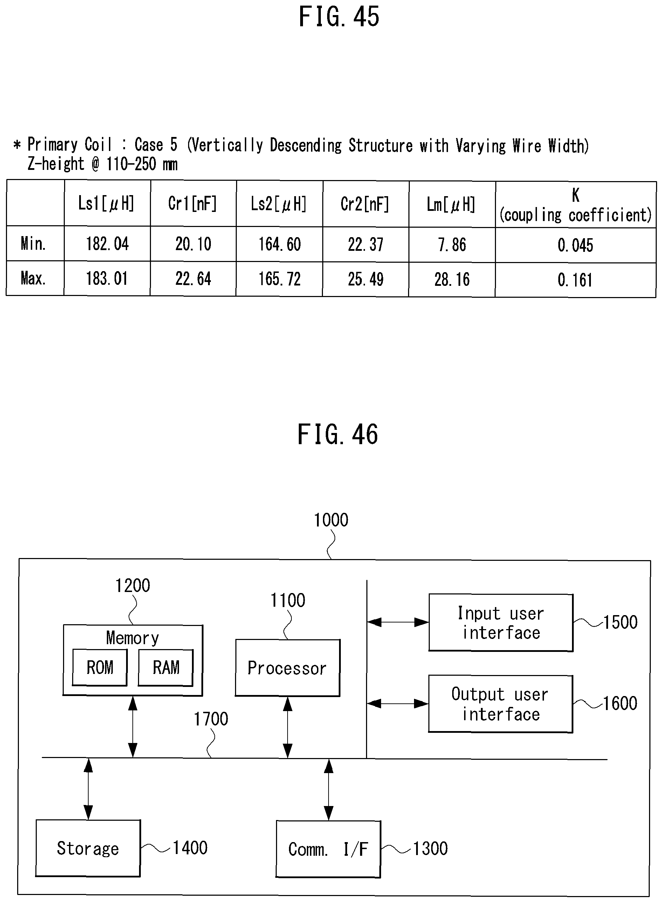

FIG. 45 is a table summarizing an example of parameters of the power transfer circuit corresponding to the examples of FIGS. 31-35.

The table of FIG. 45 includes parameter values of the power transfer circuit in the vertically descending structure with varying flat wire width in case where the Z height (i.e., the distance in the z-axis direction between the primary coil and the secondary coil) is in a range of 100-250 mm.

Referring to FIGS. 41-45, the parameter values of the power transfer circuit may be optimized based on the structure and specifications (for example, size, length for each of x-y-z-axis, thickness, number of turns, and materials, and so on) of the power transmission coil and/or the power reception coil, and the distance between the power transmission coil and the power reception coil.

Therefore, when the electric vehicle 10 and the electric vehicle supply equipment (EVSE) 20 attempt to identify each other for the wireless power transfer (WPT) of the electric vehicle 10, information exchanged between the electric vehicle 10 and the EVSE 20 may include type, structure, and specifications of the transmission coil and/the or reception coil, a preferable charging distance between the transmission coil and the reception coil, the parameters of the power transfer circuit, and so on for a more efficient wireless power transfer (WPT). That is, the electric vehicle supply equipment (EVSE) 20 and/or the wireless power transfer system including the EVSE may be described based on the information exemplified above.

FIG. 46 is a block diagram illustrating a generalized configuration of hardware included in the wireless power transmission pad and/or the wireless power reception pad or associated with the wireless power transmission pad and/or the wireless power reception pad to control a sequence for the wireless power transfer. For convenience of explanation, the hardware controlling the sequence for the wireless power transfer may be referred to as a controller 1000.

The controller 1000 may be disposed on a side of the electric vehicle 100, on a side of the electric vehicle supply equipment (EVSE), or on a side of the power transmission device or pad 210.

The controller 1000 may include at least one processor 1100, a memory 1200 storing at least one instruction for performing the operations described above through the processor 1100, and a communication interface 1300 connected to a network to perform communications. The controller 1000 for wireless power transfer may further include a storage device 1400 capable of storing the at least one instruction for performing the operations described above or data generated during the execution of the instruction. The controller 1000 for wireless power transfer may further include an input interface 1500 and an output interface 1600 for interactions with a user. The components of the controller 1000 for wireless power transfer may be connected to each other by a system bus 3700 to communicate with each other.

The processor 1100, which executes the program instructions or commands stored in the memory 1200, may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and/or a non-volatile storage medium. For example, the memory 1200 may be comprised of at least one of a read only memory (ROM) and/or a random access memory (RAM).

Here, the at least one instruction may include at least one of: a sequence suitable for identifying at least one of the electric vehicle 10, the electric vehicle supply equipment (EVSE) 20, and the power transmission pad 21, a sequence suitable for associating two or more devices among the electric vehicle 10, the electric vehicle supply equipment (EVSE) 20, the power transmission pad 21 through wireless communications, a sequence suitable for performing the alignment and/or the pairing through a positioning of a counterpart device, and/or a sequence suitable for allowing to supply an alternating current power for the power transfer after the alignment and/or the pairing.

The method of controlling and operating the WPT system according to exemplary embodiment(s) of the present disclosure may be implemented as computer instructions which can be executed by various computer means, and recorded on a non-transitory computer-readable medium. The computer-readable medium may include program instructions, data files, data structures or a combination thereof. Program instructions recorded on the medium may be particularly designed and structured for the inventive concept or available to those skilled in computer software. Examples of the computer-readable medium may include a hardware device specifically configured to store the program instructions such as magnetic media such as a hard disk, a floppy disk, and a magnetic tape, optical media such as a compact disk read only memory (CD-ROM) and a digital video disk (DVD), magneto-optical medium such as a floptical disk, and semiconductor memories such as ROM, RAM, and a flash memory. The program instructions may include not only machine language codes generated by a compiler, but also high-level language codes executable by a computer using an interpreter or the like. The hardware devices may be replaced by software modules that is executable to perform the operation of the exemplary embodiment(s), and vice versa.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiment(s), a programmable logic device such as a field-programmable gate array may be used to perform some or all of functions of the methods described herein. In some exemplary embodiment(s), the field-programmable gate array may be operated with a microprocessor to perform one of the methods described herein. In general, the methods are preferably performed by a certain hardware device.

The present disclosure is not limited by the exemplary embodiment(s). The same reference numerals in the drawings may indicate the same members. The length, height, size, width, etc. introduced in the embodiment(s) and the drawings may have been exaggerated to aid the understanding of the exemplary embodiment(s) of the present disclosure.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

Accordingly, the scope of the disclosure should not be limited by the described examples, but is to be interpreted in light of the appended claims and equivalents thereof.

## Claims

1. A wireless power transmission pad configured to wirelessly transmit power to a reception pad that comprises a secondary coil, the wireless power transmission pad comprising:
a primary coil arranged to surround a central space;
a ferrite member configured to form a magnetic coupling with the primary coil; and
a housing configured to support the primary coil and the ferrite member,
wherein the primary coil comprises a flat wire wound by a plurality of turns to be arranged in a structure that a length of a major axis of a cross section of the flat wire is parallel with a central axis of the primary coil.

2. The wireless power transmission pad of claim 1, wherein the primary coil comprises a plurality of coil elements each of which is formed such that the flat wire is wound to surround the central axis of the primary coil.

3. The wireless power transmission pad of claim 2, wherein lengths of major axes of cross sections of the plurality of coil elements are formed to be the same as each other.

4. The wireless power transmission pad of claim 2, wherein lengths of major axes of cross sections of the plurality of coil elements are formed to be larger as the coil elements are closer to the central axis of the primary coil.

5. The wireless power transmission pad of claim 2, wherein lengths of major axes of cross sections of the plurality of coil elements are formed to be larger as the coil elements are farther from the central axis of the primary coil.

6. The wireless power transmission pad of claim 2, wherein the plurality of coil elements are arranged such that distances in a z-axis direction from the ferrite member to the plurality of coil elements are formed to be the same as each other.

7. The wireless power transmission pad of claim 2, wherein the plurality of coil elements are arranged such that a distance in a z-axis direction from the ferrite member to each of the plurality of coil elements is formed to be larger as the coil element is closer to the central axis of the primary coil.

8. The wireless power transmission pad of claim 2, wherein the plurality of coil elements are arranged such that a distance in a z-axis direction from the ferrite member to each of the plurality of coil elements is formed to be larger as the coil element is farther from the central axis of the primary coil.

9. The wireless power transmission pad of claim 2, wherein the plurality of coil elements are arranged in parallel to each other.

10. The wireless power transmission pad of claim 2, wherein the plurality of coil elements are disposed sequentially such that each of the plurality of coil elements is disposed in an elevated position in a z-axis direction as the coil element is closer to the central axis of the primary coil.

11. The wireless power transmission pad of claim 2, wherein the plurality of coil elements are disposed sequentially such that each of the plurality of coil elements is disposed in a lowered position in a z-axis direction as the coil element is closer to the central axis of the primary coil.

12. The wireless power transmission pad of claim 2, wherein the primary coil comprises:
a first flat wire element comprising a plurality of first coil elements; and
a second flat wire element comprising a plurality of second coil elements,
wherein the first flat wire element and the second flat wire element are disposed to be spaced apart from each other by a certain distance in a z-axis direction.

13. The wireless power transmission pad of claim 1, wherein the wireless power transmission pad is specified by wireless power transmission pad information comprising at least one of: a type of the primary coil, a structure of the primary coil, specifications of the primary coil, a charging distance between the primary coil and the secondary coil, or a parameter of a power transfer circuit to which the primary coil is to be connected.

14. A wireless power transfer system prepared to wirelessly transmit power from a transmission pad to a reception pad, the wireless power transfer system comprising:
the transmission pad comprising a primary coil; and
the reception pad comprising a secondary coil,
wherein the transmission pad comprises:
the primary coil arranged to surround a central space;
a ferrite member configured to form a magnetic coupling with the primary coil; and
a housing configured to support the primary coil and the ferrite member,
wherein the primary coil comprises a flat wire wound by a plurality of turns to be arranged in a structure that a length of a major axis of a cross section of the flat wire is parallel with a central axis of the primary coil.

15. The wireless power transfer system of claim 14, wherein the wireless power transfer system is specified by wireless power transfer system information comprising at least one of: a type of the primary coil, a structure of the primary coil, specifications of the primary coil, a type of the secondary coil, a structure of the secondary coil, specifications of the secondary coil, a charging distance between the primary coil and the secondary coil, or a parameter of a power transfer circuit to which the primary coil and the secondary coil are to be connected.

16. The wireless power transfer system of claim 14, wherein the primary coil comprises a plurality of coil elements each of which is formed such that the flat wire is wound to surround the central axis of the primary coil.

17. The wireless power transfer system of claim 16, wherein lengths of major axes of cross sections of the plurality of coil elements are formed to be the same as each other.

18. The wireless power transfer system of claim 16, wherein lengths of major axes of cross sections of plurality of coil elements are formed to vary according to a distance from the coil element to the central axis of the primary coil.

19. The wireless power transfer system of claim 16, wherein the plurality of coil elements are disposed sequentially such that each of the plurality of coil elements is disposed in an elevated position in a z-axis direction as the coil element is closer to the central axis of the primary coil.

20. The wireless power transfer system of claim 16, wherein the plurality of coil elements are disposed sequentially such that each of the plurality of coil elements is disposed in a lowered position in a z-axis direction as the coil element is closer to the central axis of the primary coil.
